Europäisches Patentamt

European Patent Office

Office européen des brevets

(19)

(11) EP 1 413 981 A1

(12) EUROPEAN PATENT APPLICATION
published in accordance with Art. 158(3) EPC

(43) Date of publication:
28.04.2004 Bulletin 2004/18

(51) Int Cl.⁷: **G06N 3/00**

(21) Application number: 02747722.3

(86) International application number:
PCT/JP2002/007429

(22) Date of filing: 23.07.2002

(87) International publication number:
WO 2003/012738 (13.02.2003 Gazette 2003/07)

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 27.07.2001 JP 2001228318
31.05.2002 JP 2002160809

(71) Applicant: National Institute of Advanced
Industrial Science and Technology
Tokyo 100-0013 (JP)

(72) Inventors:
• MURAKAWA, Masahiro,
Nat. Ins. Adv. Ind. Sci.&Tech.
Tsukuba-shi, Ibaraki 305-8564 (JP)
• HIGUCHI, Tetsuya, Nat. Ins. Adv. Ind. Sci.&Tech.
Tsukuba-shi, Ibaraki 305-8564 (JP)

(74) Representative: Smith, Norman Ian et al
fJ CLEVELAND
40-43 Chancery Lane
London WC2A 1JQ (GB)

(54) **OPTIMAL FITTING PARAMETER DETERMINING METHOD AND DEVICE, AND OPTIMAL FITTING PARAMETER DETERMINING PROGRAM**

(57)    The fitting parameters of a physics model are represented in the form of real-number vectors as the information on chromosomes of a genetic algorithm, a plurality of individuals having the chromosomes is prepared and a genetic algorithm is used to fit and optimize the parameters to the measured data points of physical quantities. Child individuals from the crossover process of the genetic algorithm are generated from three parent individuals at a determined normal distribution probability, and the replacement process takes individuals that are superior with respect to all criteria from among the selected parent individuals and plurality of child individuals and makes them the individuals of the next generation population. Moreover, optimal fitting parameters are found for each set of measurement data points under a plurality of experimental conditions, and collective fitting is performed so that the fitting parameters vary smoothly even among experimental conditions: Thereby, it is possible to simulate physical phenomena with physics models without error even under experimental conditions at which experiments were not performed.

FIG. 5

$\alpha = +2.31$

$\beta = -6.45$

$\gamma = -3.28$

$\theta = +3.55$

$\phi = -4.12$

EP 1 413 981 A1

**Description**

Field of the Invention:

The invention relates to a method and apparatus for determining optimal fitting parameters and to an optimal fitting parameter determination program, whereby a physics model having a plurality of parameters is fitted as close as possible to discrete data obtained by means of the measurement of physical qualities.

Background Art:

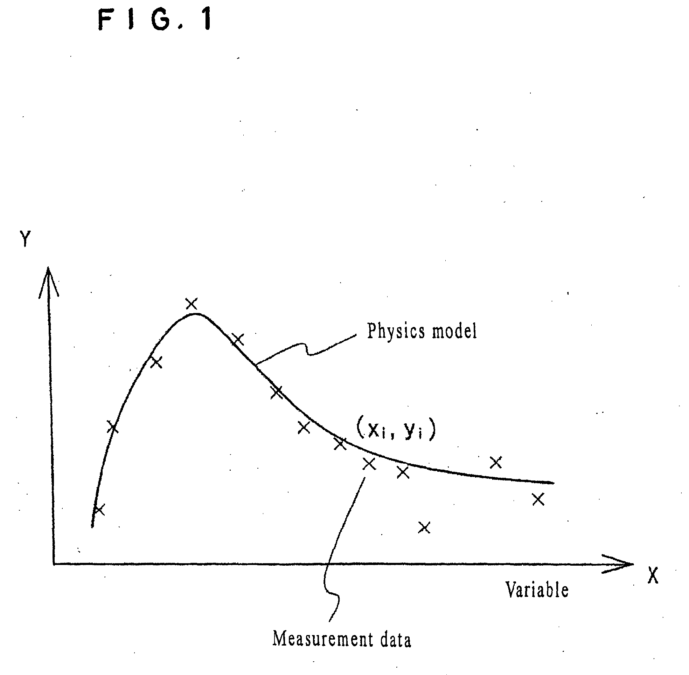

The analysis of physical phenomena from experimental results and the prediction of these phenomena using the results of this analysis are often performed in engineering. In this case, the procedure performed is as follows: a physics model is proposed to explain the experimental results, and the physics model is determined and fit so that the parameters of that physics model match the experimental results $(x_i, y_i)$ as closely as possible (see FIG. 1). Once the fitting parameters are determined, that physics model can be used to predict the physical phenomenon without performing experiments.

However, in order to predict physical phenomena with the highest possible precision, it is necessary to fit the parameters of the physics model as precisely as possible. In order to do this, fitting using the least squares method had been performed in the past. For example, in JP-A HEI 7-73207, a method is proposed wherein the parameters of a predetermined interatomic potential function are determined by the least squares method to match the experimental results.

However, in recent years there is a need to predict physical phenomena with even better precision, so the proposed physics models have become more complex and more sophisticated. For this reason, the number of parameters to be fitted increases and if the conventional least squares method is used, the calculations often require large amounts of time.

In addition, when fitting the parameters of complex physics models, the setting of the initial parameters in calculation becomes important. If the setting of these initial parameters is done poorly, convergence may require a long time or a completely incorrect solution may be obtained in certain cases. This is because the parameter values may fall into a local minimum in the parameter space in the middle of an iterative calculation. As a result, in order to obtain the optimal initial values, one must ultimately depend on trial and error, so there is a problem in that a large amount of time and effort is required.

Moreover, when the least squares method is used, the sum of the squares of the difference between the experimental data and the predicted data calculated from the physics model is used as the evaluation criterion. However, evaluating the sum of squares alone is inadequate, so it is also necessary to evaluate the maximum absolute value of the error. Yet the conventional least squares method cannot handle anything except the sum of the squares of the error.

On the other hand, the genetic algorithm is one probabilistic search technique that: (1) works effectively in large-scale searches, (2) does not require differentials or other derivative information other than the evaluation function, and (3) is an algorithm that is easily implemented. This algorithm can be applied to the optimization of the fitting parameters, and has the promise of solving the aforementioned problems. However, with the prior art, the genetic operation used within the genetic algorithm can handle only discrete parameter values (binary values), so it is necessary to discretize the physics model parameters which are conventionally continuous values, and thus it has been difficult to obtain solutions with sufficient precision within a practical period of time.

To wit, if one attempts to obtain a sufficiently precise solution with the conventional discrete genetic algorithm, the degree of discretization of the various parameters must be made extremely fine, so the amount of genetic information is necessarily large, thus leading to a marked increase in computation time. Conversely, if the various parameters are discretized roughly in order to obtain a solution within a practical amount of computation time, there is a risk that the optimal solution may not be reached if the optimal solution is present between the smallest increments in discretization.

Moreover, the conventional genetic algorithm has the problem of premature convergence. This is a problem wherein, when a solution with relatively good precision is found in the initial stage of a search, individuals that resemble that solution make up most of the population, and the search does not proceed any further. Problems of fitting parameter optimization have the possibility of having many local minimums so there is the problem in that such premature convergence may occur frequently so a sufficiently precise solution is not obtained.

This problem of premature convergence is typically avoided in the prior art by increasing the number of individuals in the population, but this gives rise to the problem in that the amount of computation increases and convergence to the optimal solution becomes slower.

The present invention was proposed in light of such problems that are unresolved in the prior art, and has as its object to provide a method and apparatus for determining optimal fitting parameters, and an optimal fitting parameter determination program that is able to efficiently fit the parameters of a physics model precisely and optimally.

Disclosure of the Invention:

This invention provides a method of determining optimal fitting parameters, which comprises: in a physics model having a plurality of parameters, in order to determine optimal fitting parameters for discrete data points obtained by measurement of physical quantities, representing the plurality of parameters in a form of real-number vectors as information on chromosomes of a genetic algorithm, preparing a population of a plurality of individuals having the chromosomes and using the genetic algorithm to optimize fitting parameters.

Moreover, in the method of determining optimal fitting parameters according to this invention, the genetic algorithm comprises at least: a selection step of selecting at least two parent individuals, a child individual generation step of generating a plurality of new child individuals by applying at least one of a group of genetic operations consisting of a crossover process and a mutation process to the selected parent individuals, and a replacement step of determining individuals to be made individuals of a next generation of population from among the selected parent individuals and the generated new child individuals.

In the method of determining optimal fitting parameters according to this invention, in the child individual generation step, the crossover process generates child individuals with real-number vectors having as components values appearing according to a continuous stipulated incidence probability distribution, and the incidence probability distribution is set based on real-number vector components of each of the selected parent individuals.

In the method of determining optimal fitting parameters according to this invention, in the child individual generation step, the mutation process generates child individuals with real-number vectors having as components values appearing according to a continuous stipulated incidence probability distribution, and the incidence probability distribution is such that an incidence probability becomes higher the closer to at least one of the selected parent individuals.

In the method of determining optimal fitting parameters according to this invention, in the selection step, three parent individuals are selected and the incidence probability distribution is a normal distribution centered on center points of two of the three selected parent individuals, and a standard deviation of the normal distribution is such that a component in a direction of a main axis connecting real-number vectors of the two parent individuals is proportional to a distance between the two parent individuals, and components in other axes are proportional to a distance between the main axis and a remaining one of the three selected parent individuals.

In addition, in the method of determining optimal fitting parameters according to this invention, the population of the plurality of individuals is laid out on lattice vertices, and in the selection step, regional subpopulations are formed from each individual and a stipulated number of neighboring individuals, and the at least two parent individuals are selected from among the regional subpopulations.

In the method of determining optimal fitting parameters according to this invention, in the replacement step, from among the selected parent individuals and the generated new child individuals, individuals of the next generation of population are determined based on a superiority relationship consisting of one evaluation criterion.

In the method of determining optimal fitting parameters according to this invention, in the replacement step, from among the selected parent individuals and the generated new child individuals, individuals of the next generation of population are determined based on a superiority relationship consisting of two or more evaluation criteria.

In the method of determining optimal fitting parameters according to this invention, optimization by means of a local search technique is performed with respect to the fitting parameters optimized using the genetic algorithm.

In the method of determining optimal fitting parameters according to this invention, the physics model is provided for each of different experimental conditions, a plurality of sets of measurement data are provided by varying each of the experimental conditions in a stepwise manner, optimal fitting parameters for the physics model are found for each set of measurement data by means of an optimization technique, the fitting parameters are fitted using fitting functions so that changes among the experimental conditions are smooth, and the optimal fitting parameters of the physics model for each experimental condition are determined collectively.

In the method of determining optimal fitting parameters according to this invention, the optimization technique is performed by means of a local search technique.

The invention also provides an optimal fitting parameter determination apparatus for a physics model having a plurality of parameters, comprising: fitness calculation means that, for discrete data points obtained by measurement of physical quantities, calculates a fitness based on measurement data and predicted values calculated from the physics model, genetic operation means wherein the plurality of parameters are represented in a form of real-number vectors as information on chromosomes. of a genetic algorithm and genetic operations of the genetic algorithm are performed on a population of a plurality of individuals having the chromosomes, and judgment means that judges whether or not a next generation of the individual population meets an evaluation criterion, wherein an individual that has a highest fitness within the individual population when the next generation of the individual population meets the evaluation criterion is used for the optimal fitting parameters of the physical model.

In the optimal fitting parameter determination apparatus according to this invention, the genetic operation means comprises at least: a selection processor that selects at least two parent individuals, a child individual generator that generates a plurality of new child individuals by applying at least one of a group of genetic operations consisting of a crossover process and a mutation process to the selected parent individuals, and a replacement processor that determines individuals to be made individuals of the next generation of the individual population from among the selected parent individuals and the generated new child individuals.

In the optimal fitting parameter determination apparatus according to this invention, in the child individual generator, the crossover process generates child individuals with real-number vectors having as components values appearing according to a continuous stipulated incidence probability distribution, and the incidence probability distribution is set based on real-number vector components of each of the selected parent individuals.

In the optimal fitting parameter determination apparatus according to this invention, in the child individual generator, the mutation process generates child individuals with real-number vectors having as components values appearing according to a continuous stipulated incidence probability distribution, and the incidence probability distribution is such that an incidence probability becomes higher the closer to at least one of the selected parent individuals.

In the optimal fitting parameter determination apparatus according to this invention, in the selection processor, three parent individuals are selected and the incidence probability distribution is a normal distribution centered on center points of two of the three selected parent individuals, and a standard deviation of the normal distribution is such that a component in a direction of a main axis connecting real-number vectors of the two parent individuals is proportional to a distance between the two parent individuals, and components in other axes are proportional to a distance between the main axis and a remaining one of the three selected parent individuals.

In the optimal fitting parameter determination apparatus according to this invention, the population of the plurality of individuals is laid out on lattice vertices, and in the selection processor, regional subpopulations are formed from each individual and a stipulated number of neighboring individuals, and at least two parent individuals are selected from among the regional subpopulations.

In the optimal fitting parameter determination apparatus according to this invention, in the replacement processor, from among the selected parent individual and the generated new child individuals, individuals of the next generation of population are determined based on a superiority relationship consisting of one evaluation criterion.

In the optimal fitting parameter determination apparatus according to this invention, in the replacement processor, from among the selected parent individual and the generated new child individuals, individuals of the next generation of the population are determined based on a superiority relationship consisting of two or more evaluation criteria.

The optimal fitting parameter determination apparatus according to this invention further comprises processing means that performs optimization by means of a local search technique with respect to the fitting parameters optimized using the genetic algorithm.

The optimal fitting parameter determination apparatus according to this invention further comprises optimization means that, when a plurality of sets of measurement data are provided by varying each of experimental conditions in a stepwise manner, finds optimal fitting parameters for each set of measurement data by means of an optimization technique, and parameter fitting processing means that fits the fitting parameters using fitting functions so that changes among the experimental conditions are smooth, wherein the fitness calculation means calculates the fitness based on the fitting parameters found by the parameter fitting processing means.

In the optimal fitting parameter determination apparatus according to this invention, the optimization means performs optimization by means of a local search technique.

The invention also provides an optimal fitting parameter determination program executed by a computer, implementing a process wherein: parameters of a physics model having a plurality of parameters are represented in a form of real-number vectors as information on chromosomes of a genetic algorithm, and a population of a plurality of individuals having the chromosomes is prepared and the genetic algorithm is used to optimize fitting parameters.

In the optimal fitting parameter determination program according to this invention, the genetic algorithm comprises at least: a selection step of selecting at least two parent individuals, a child individual generation step of generating a plurality of new child individuals by applying at least one of a group of genetic operations consisting of a crossover process and a mutation process to the selected parent individuals, a fitness calculation step of calculating the physics model and calculating fitness values of the generated new child individuals, and a replacement step of determining individuals to be made individuals of a next generation of population from among the selected parent individuals and the generated new child individuals based on the calculated fitness values.

In the optimal fitting parameter determination program according to this invention, in the child individual generation step, the crossover process generates child individuals with real-number vectors having as components values appearing according to a continuous stipulated incidence probability distribution, and the incidence probability distribution is set based on real-number vector components of each of the selected parent individuals.

**EP 1 413 981 A1**

In the optimal fitting parameter determination program according to this invention, in the child individual generation step, the mutation process generates child individuals with real-number vectors having as components values appearing according,to a continuous stipulated incidence probability distribution, and the incidence probability distribution is such that an incidence probability becomes higher the closer to at least one of the selected parent individuals.

In the optimal fitting parameter determination program according to this invention, in the selection step, three parent individuals are selected and the incidence probability distribution is a normal distribution centered on center points of two of the three selected parent individuals, and a standard deviation of the normal distribution is such that a component in a direction of a main axis connecting real-number vectors of the two parent individuals is proportional to a distance between the two parent individuals, and components in other axes are proportional to a distance between the main axis and a remaining one of the three selected parent individuals.

In the optimal fitting parameter determination program according to this invention, the population of the plurality of individuals is laid out on lattice vertices, and in the selection step, regional subpopulations are formed from each individual and a stipulated number of neighboring individuals, and at least two parent individuals are selected from among the regional subpopulations.

In the optimal fitting parameter determination program according to this invention, in the replacement step, from among the selected parent individual and the generated new child individuals, individuals of the next generation of population are determined based on a superiority relationship consisting of one evaluation criterion.

In the optimal fitting parameter determination program according to this invention, in the replacement step, from among the selected parent individual and the generated new child individuals, individuals of the next generation of population are determined based on a superiority relationship consisting of two or more evaluation criteria.

In the optimal fitting parameter determination program according to this invention, optimization by means of a local search technique is performed with respect to the fitting parameters optimized using the genetic algorithm.

In the optimal fitting parameter determination program according to this invention, optimal fitting parameters for the physics model are found for each set of measurement data by means of an optimization technique, the fitting parameters are fitted using fitting functions so that changes among experimental conditions are smooth, and the optimal fitting parameters of the physics model for each experimental condition are determined collectively.

In the optimal fitting parameter determination program according to this invention, the optimization technique is performed by means of a local search technique.

As described above, with this invention, the fitting parameters of a physics model are expressed as real-number vectors, and it is possible to optimize fitting parameters using a genetic algorithm by preparing a population of a plurality of individuals that have the aforementioned chromosomes, so the process of discretizing chromosome information is unnecessary, and the precision of the solutions obtained and computation time are not affected by the precision of discretization.

Brief Explanation of the Drawings:

FIG. 1 is an explanatory diagram used to describe the fitting of measurement data with a physics model.

FIG. 2 is a schematic flowchart of the procedure of fitting parameter optimization according to the present invention.

FIG. 3 is a schematic flowchart of the procedure of a typical genetic algorithm.

FIG. 4 is an explanatory diagram illustrating an example of a chromosome used in a typical genetic algorithm.

FIG. 5 is an explanatory diagram illustrating the chromosomes used in the genetic algorithm in the method of the present invention and the fitting parameters optimized thereby.

FIG. 6 is an explanatory diagram illustrating the fitness used in the genetic algorithm of Embodiment 1.

FIG. 7 is a flowchart of the procedure of the crossover process performed in the genetic algorithm according to the method of the present invention.

FIG. 8 is a diagram illustrating an example of the crossover process performed in the genetic algorithm according to the method of the present invention.

FIG. 9 is an explanatory diagram illustrating the procedure of the mutation process performed in the genetic algorithm according to the method of the present invention.

FIG. 10 is a flowchart of the procedure of the replacement process performed in the genetic algorithm according to the method of the present invention.

FIG. 11 is a flowchart of the procedure of the fitting parameter optimization used in the genetic algorithm of Embodiment 1.

FIG. 12 is a diagram used to describe an example of regional subpopulations in a modification of Embodiment 1.

FIG. 13 is a flowchart of the procedure of the selection step in the modification of Embodiment 1.

FIG. 14 is a flowchart of the procedure of the fitting parameter optimization used in the genetic algorithm of Embodiment 2.

FIG. 15 is a flowchart of the procedure of the replacement step of Embodiment 2.

FIG. 16 is a diagram illustrating the fitting curve (Experimental Condition 1) calculated by the fitting parameter optimization according to Embodiment 1.

FIG. 17 is a diagram illustrating the fitting curve (Experimental Condition 10) calculated by the fitting parameter optimization according to Embodiment 1.

FIG. 18 is a graph of the change in the fitting parameter $R_p$ calculated under each of the experimental conditions.

FIG. 19 is a graph of the change in the fitting parameter $\sigma_p$ calculated under each of the experimental conditions.

FIG. 20 is a graph of the change in the fitting parameter $\gamma$ calculated under each of the experimental conditions.

FIG. 21 is a graph of the change in the fitting parameter $\beta$ calculated under each of the experimental conditions.

FIG. 22 is a flowchart of the procedure of the fitting parameter optimization used in the genetic algorithm of Embodiment 3.

FIG. 23 is a diagram showing the correspondence of chromosomes, genes and experimental conditions, and fitting parameters in Embodiment 3.

FIG. 24 is a flowchart showing the procedure for calculating the fitness in consideration of smoothness according to Embodiment 3.

FIG. 25 is a flowchart of the procedure for calculating the mean square error under a certain experimental condition of Embodiment 3.

FIG. 26 is a graph of the change in the fitting pararrieter $R_p$ calculated in accordance with Embodiment 3.

FIG. 27 is a graph of the change in the fitting parameter $\sigma_p$ calculated in accordance with Embodiment 3.

FIG. 28 is a graph of the change in the fitting parameter $\gamma$ calculated in accordance with Embodiment 3.

FIG. 29 is a graph of the change in the fitting parameter $\beta$ calculated in accordance with Embodiment 3.

FIG. 30 is a functional block diagram of the fitting parameter optimization apparatus that works the methods of Embodiment 1 and Embodiment 2.

FIG. 31 is a functional block diagram of the fitting parameter optimization apparatus that works the methods of Embodiment 1 and Embodiment 2, in the case that the procedure of a physics model computation is included.

FIG. 32 is a functional block diagram of the fitting parameter optimization apparatus that works the method of Embodiment 3.

FIG. 33 is a functional block diagram of the fitting parameter optimization apparatus that works the method of Embodiment 3, in the case that the procedure of a physics model computation is included.


Best Mode for Carrying out the Invention:

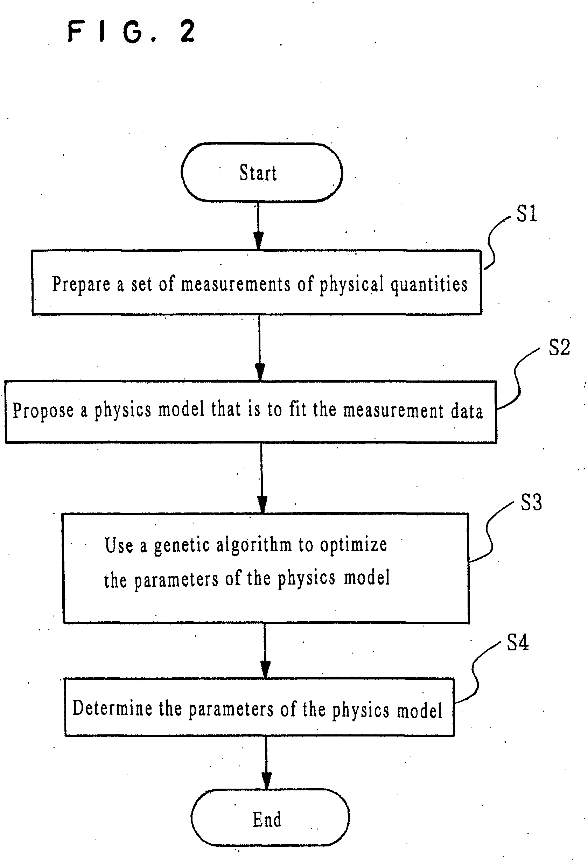

Here follows a description of an embodiment of the present invention made with reference to the appended drawings: FIG. 2 is a flowchart of the process of determining optimal fitting parameters for the physics model according to Embodiment 1 of the present invention. In FIG. 2, first in Step S1, a set of discrete measurements of physical quantities is prepared. Next in Step S2, a physics model that fits the measurement data is proposed. In the next Step S3, a genetic algorithm is used to optimize the parameters of the physics model proposed in Step S2. Lastly in Step S4, the parameters of the final physics model are determined.

The literature on genetic algorithms includes *Genetic Algorithms in Search, Optimization, and Machine Learning* by David E. Goldberg published in 1989 by the Addison-Wesley Publishing Company, Inc.

In a typical genetic algorithm, a population of ideal organisms having genes is established and those individuals that are fittest with respect to a predetermined environment are allowed to survive and the probability of their leaving descendents depends on this fitness. Then, the children inherit the genes of the parents through a procedure called genetic operation. By performing such a change of generations, the genes and organism population are allowed to evolve until individuals having a high fitness account for a large proportion of the organism population. Moreover, the types of genetic operation used at this time include the crossover of genes, mutations and the like which also occur in the reproduction of real organisms.

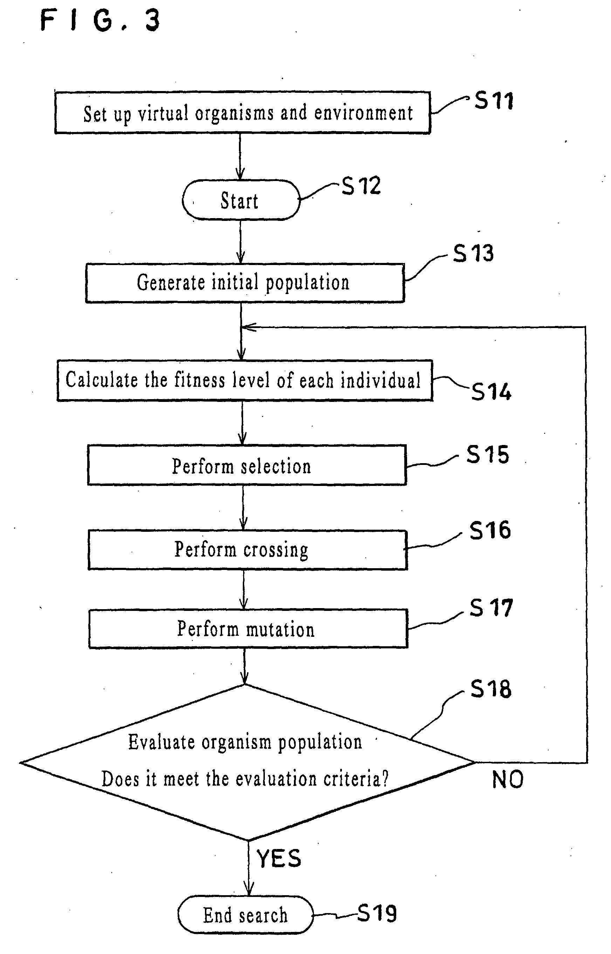

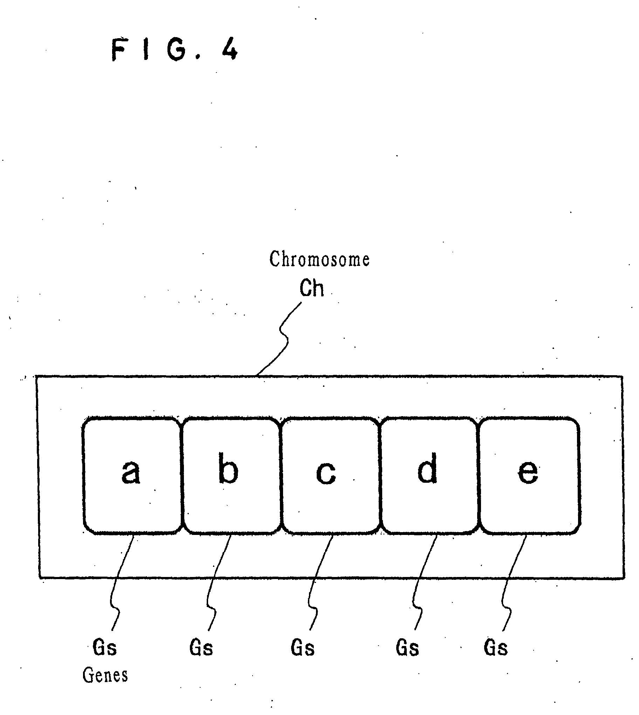

FIG. 3 is a schematic flowchart of the procedure of a typical genetic algorithm. In this procedure, in the first Step S11, the structure of the chromosomes of an individual is determined. To wit, the format of data to be used during the change of generations is decided on from the parent individuals to the descendent individuals. FIG. 4. shows an example of the structure of a chromosome. Here, the variable vector x of the optimization problem to be solved is represented by $n$ symbols $A_i$ (where $i$ = 1, 2, ... $n$), and these are taken to be a chromosome with $n$ genes. In FIG. 4, Ch symbolizes the chromosome and Gs the genes, where the number of genes $n$ is 5. The gene values $A_i$ are typically binary numbers with a value of 0 or 1. In the example of FIG. 4, the letters a to e are genes. A set of genes thus symbolized is the chromosome of an individual.

In Step S11 of FIG. 3, the method of calculating the fitness that indicates how fit each individual is with respect to the environment is selected from memory and entered. At this time, an evaluation function for the optimization problem to be solved is designed so that the higher variable or lower variable its value is, the higher the fitness of the corresponding individual becomes. In addition, in the change of generations performed thereafter, the higher the fitness of an individual, the greater its probability of survival or its probability of leaving descendents becomes in comparison to individuals with a lower fitness. Conversely, individuals with a low fitness are assumed to be individuals ill fit to the environment and are allowed to die out. This reflects the principle of natural selection in the theory of evolution. To wit, the fitness is a measure that indicates the superiority of each individual when seen from the probability of survival.

In a genetic algorithm, the problem to be solved is typically a total black box at the time of the start of the search, so it is completely unknown as to what kind of individual is desirable. For this reason, the initial organism population is generated using random numbers to randomly generate individuals. Accordingly, in the procedure described here also, in Step S13 after the process is started in Step S12, the initial organism population is generated randomly using random numbers. Note that if there is any advance knowledge of the search space, the organism population may be generated mainly in those portions where the evaluated value is thought to be high. Here, the total number of individuals generated is the number of individuals in the population.

Next in Step S14, the fitness of each individual in the organism population is calculated using the calculation method determined previously in Step S11. Once the fitness is determined for each individual, in the next Step S15, from the population, the individuals are selected to form the basis of the next generation of individuals. However, if only selection is performed, this will simply increase the proportion within the organism population of individuals having the highest fitness at the current point in time, and no new search point is generated. For this reason, the manipulations called crossover and mutation to be described below are performed.

To wit, in the next Step S16, from the next generation of individuals generated by selection, pairs of two individuals are randomly selected at a stipulated frequency and their chromosomes are combined to create a child chromosome (crossover). Here, the probability of a cross occurring is called the crossover rate. The descendent individuals generated from crossover are individuals that inherit traits of each of the individuals that were its parents. This crossover causes evolution that increases the diversity of chromosomes of individuals.

After crossover, in the next Step S17, the genes of individuals suddenly change at a fixed probability (mutation). Here, the probability of a mutation occurring is called the mutation rate. The phenomenon of genes being overwritten with a low probability is one that is seen also in the genes of real organisms. However, if the mutation rate is set too high, the characteristics of traits inherited from parents in crossover are lost, so this is equivalent to a random search of the search space and thus care is needed.

Once the next-generation population is determined by means of this process, next in Step S18, it is determined whether or not the next-generation organism population thus generated satisfies the evaluation criteria for ending the search. These evaluation criteria depend on the problem, but typical criteria include the following.

- The maximum fitness within the organism population is greater than a threshold value.
- The average fitness within the organism population is greater than a threshold value.
- Generations with a rate of increase of the fitness within the organism population less than a certain threshold value have continued for longer than a fixed period of time.
- The number of changes of generations has reached a predetermined number.

If one of the end conditions described above is met, the search goes to Step S19 to end the search. The individual with the highest fitness within the organism population at that time becomes the solution to the optimization problem being sought. If the ending condition is not met, the search is returned to the step of calculating the fitness of each individual in Step S14 to continue the search. By repeating this change of generations in this manner, it is possible to increase the fitness of individuals while maintaining a constant number of individuals in the population. This completes an overview of a typical genetic algorithm.

The framework of the genetic algorithm described above is a loose one that does not stipulate the details of actual programming, and thus it does not stipulate a detailed algorithm for individual problems. For this reason, the genetic algorithm used at the time of determining the optimization fitting parameters according to the present invention must implement the following items for determining optimization-fitting parameters:

(a) the method of representing chromosomes
(b) the individual evaluation function
(c) the selection method
(d) the crossover method
(e) the mutation method
(f) the search end conditions

(a) Method of representing chromosomes: this Embodiment is characterized in that the chromosome representation in the genetic algorithm is such that the parameters of the physics model are. used directly as real-number vectors, and thus there is no need for the process of discretization of chromosome information and this solves the problem in which the precision of discretization affects the precision of the solution found and the computation time.

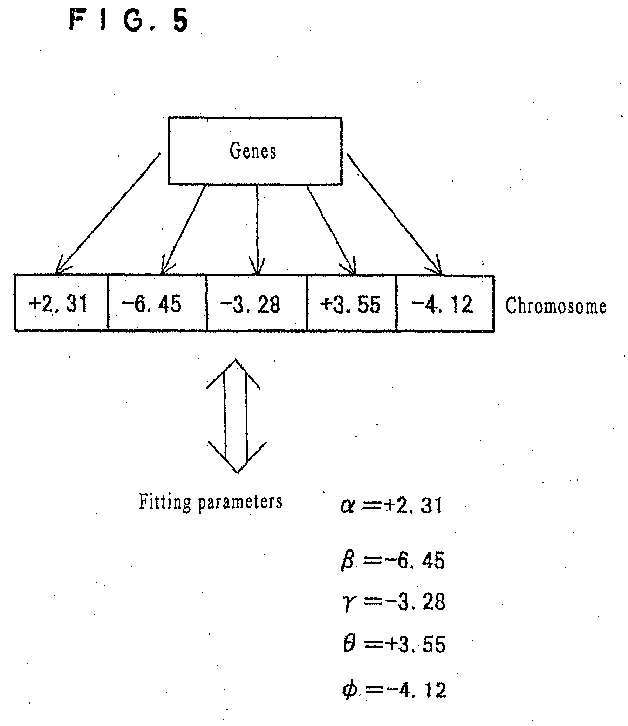

Here follows a description of this with reference to the example of an individual gene shown in FIG. 5. The structure of chromosomes in the genetic algorithm is such that there is a one-to-one correspondence between the genes and the physics model's parameter values ($\alpha$, $\beta$, $\gamma$, $\theta$, $\phi$) (number of parameters $n = 5$). When the physics model's parameter values are (+2.31, -6.45, -3.28, +3.55, -4.12), the genetic algorithm's chromosome. becomes (+2.31, -6.45, -3.28, +3.55, -4.12). In the example of FIG. 5, the number of parameters $n$ is 5 and this number is different depending on the physics model proposed.

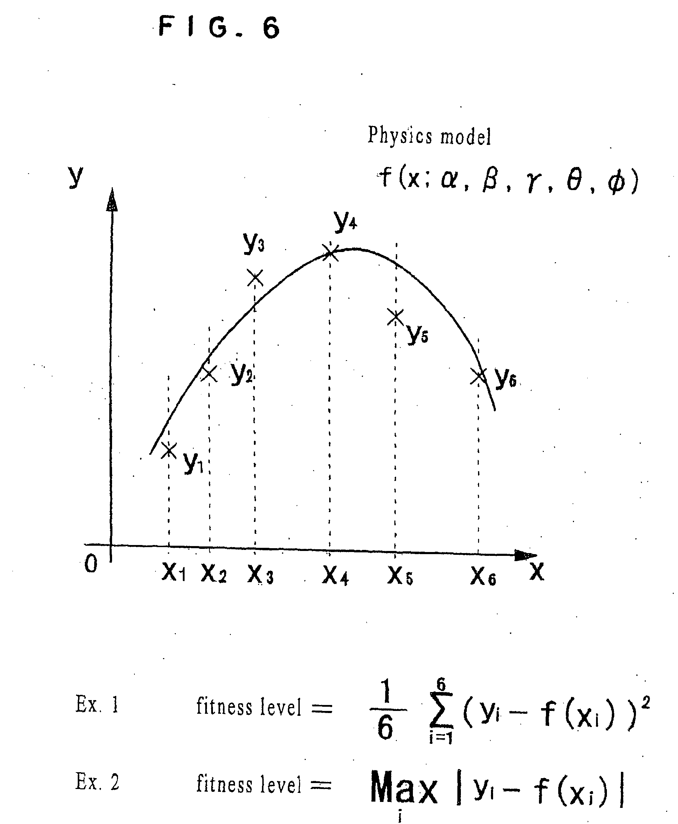

(b) Individual evaluation function: the individual evaluation function of the genetic algorithm, namely the fitness used, is the mean square of the error between the discretized measurement data from the experimental results and the theoretical values calculated from the physics model determined by the parameters encoded in the chromosome. In addition, the fitness evaluation may be performed not only by the aforementioned mean square error but also by the maximum of the absolute value of the error. In the example of FIG. 6, the physics model is $y = f(x)$ where $x$ is a variable, and when the five fitting parameters ($\alpha$, $\beta$, $\gamma$, $\theta$, $\phi$) are found from six sets of experimental data ($x_1$, $y_1$) through ($x_6$, $y_6$), an example is shown where the two functions Ex. 1 and Ex. 2 can be used as evaluation functions suited to the physics model environment.

The evaluation function thus determined may possibly have a large number of locally optimum solutions (local minima). For this reason, when typical search techniques, such as the hillclimbing method or simplex method, are used, the search may be caught in local minima and as a result, high-precision fitting parameters may not be obtained. However, the genetic algorithm is a probabilistic technique and is also a parallel search technique using a plurality of search points, with characteristics that make it not easily caught in local minima, so by using the evaluation functions according to this Embodiment, the search can proceed extremely effectively.

(d) Crossover method: in the conventional genetic algorithm that handles discrete binary values, crossover is performed by partially exchanging the genes in the chromosome. However, in the gene-type space defined by a binary representation, the phase structure is much different from the actual fitting parameter space after conversion to real-number values. For example, even if only one bit is inverted in a binary number, its effect in the parameters after conversion will differ depending on the position of the inverted bit. If the most significant bit is inverted, this will greatly change its parameter value but if the least significant bit is inverted the parameter will hardly change at all.

Thus, in the conventional crossover method in which the genes are partially exchanged, the child individuals do not appropriately inherit the traits acquired by the parent individuals because continuity of the parameter space is not taken into consideration. For this reason, there are problems in which meaningless searches are repeated or searching is not performed adequately, so optimization is not performed adequately. To this end, the present invention proposes a novel crossover method that takes into consideration the continuity of fitting parameters.

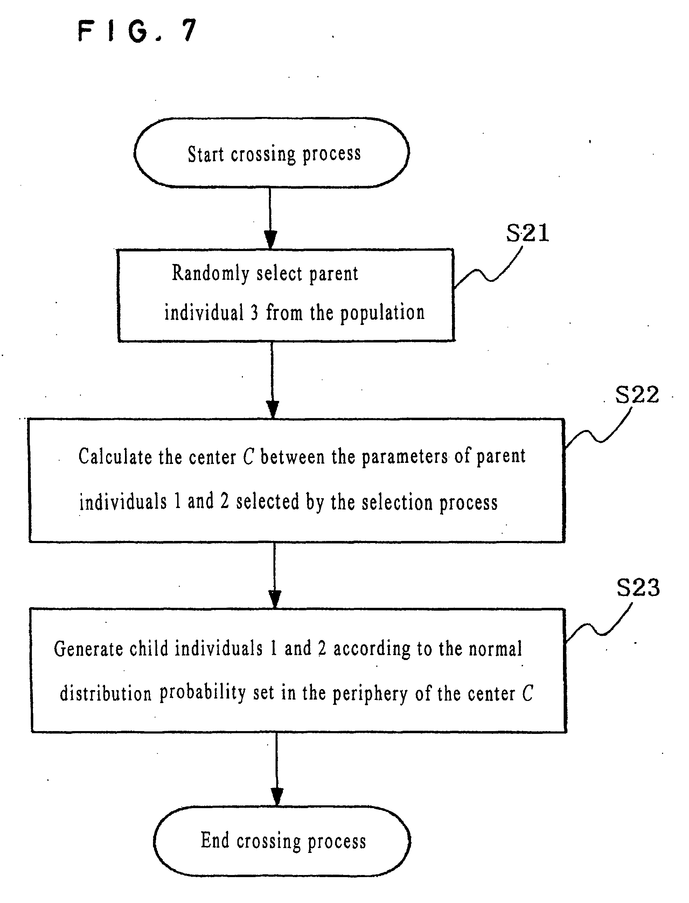

FIG. 7 is a schematic flowchart of one example of the crossover used in the present invention. First, in Step S21, parent individual 3 is randomly selected from the individual population. Next in Step S22, is calculated the center C between the parameters of parent individual 1 and parent individual 2 selected by means of the selection of Step S15 of FIG. 3. Then in Step S23, the two child individuals are generated according to a continuous stipulated incidence distribution set in the periphery of the center C, e.g. a normal distribution probability. Specifically, a child individual is generated according to equation (1) below. A Cauchy distribution or other differentiable incidence distribution may be used as the continuous incidence distribution.

$$x_k = x_c + \xi d + \sum_{i=1}^{n-1} \eta_i e_i D \tag{1}$$

where

$$x_c = \frac{1}{2}(x_1 + x_2)$$

$$d = x_2 - x_1$$

Here, $n$ is the number of parameters (number of dimensions in the parameter space, $x_k$ is the coordinate in the parameter space of the generated child individual $k$, $x_c$ is the coordinate of the center C, $d$ is the vector of the line (called the main axis) connecting parent individual 1 and parent individual 2, and $D$ is the distance from parent individual 3 to the main axis. $e_i$ is the normal orthogonal base vector forming a partial space ($n$-1 dimensions) perpendicular to the main axis. $\xi$ is a random number according to the normal distribution $N(0, \sigma_\xi^2)$, $\eta_i$ is $n$-1 independent random numbers according to the normal distribution $N(0, \sigma_\eta^2)$. If two parent individuals 3 are selected randomly and the child individual generation according to equation (1) is repeated twice, child-individuals $x_{k1}$ and $x_{k2}$ can be generated from parent individuals 1 and 2.

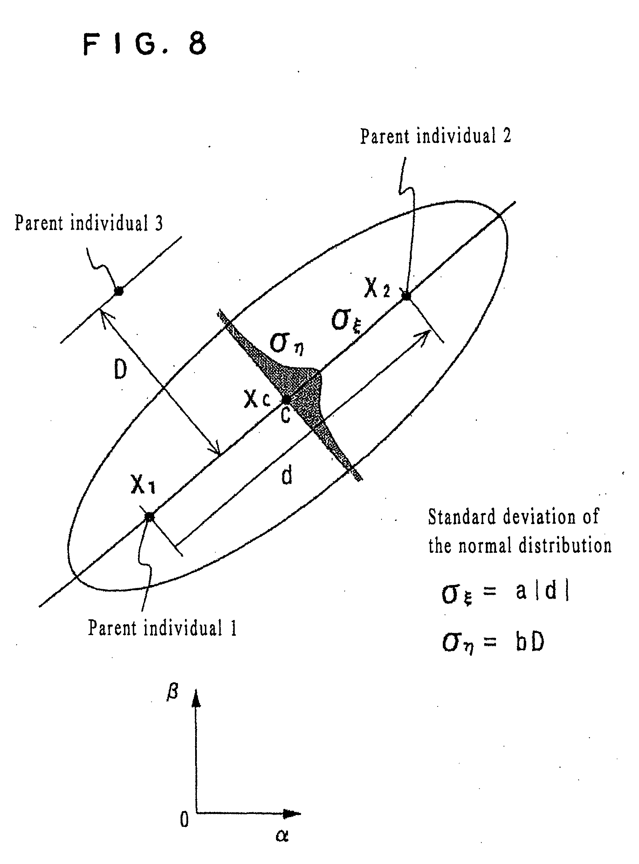

FIG. 8 shows the method of finding the standard deviation of the normal distribution probability in the case that there are two fitting parameters $\alpha$ and $\beta$ (two-dimensional parameter space). The component $\sigma_\xi$ of the standard deviation of the normal distribution in the direction of the main axis is proportional to the distance $|d|$ between the two parents ($\sigma_\xi = a|d|$), and the axis component $\sigma_\eta$ perpendicular thereto is set to be proportional to the distance $D$ from the main axis to parent individual 3 ($\sigma_\eta = bD$).

By using this crossover method (child individual generation method), the continuity of the fitting parameters can be treated as positive. Treating as positive means that neighboring individuals in the parameter space are also neighboring in the gene space. If the binary number representation of the conventional technique is used for the gene representation, neighboring individuals in the parameter space are not necessarily neighboring in the gene space, so the search process is performed as a global search in both the starting and ending stages. However, with the technique described above, global searches are performed in the early stages of the search in which the distances among parents within the population are long, but in the ending stages of the search in which the distances among parents are short, a local search can be performed.

(e) Mutation method: in the conventional genetic algorithm that handles discrete binary values, mutation is performed by an operation in which some of the genes of the chromosome are inverted. However, because this operation also does not take into consideration the continuity of fitting parameters, each stage of the search was in charge of both global searches and local searches. To solve this problem, in this Embodiment, mutation was made an operation in which normal random numbers generated according to the normal distribution $N(0, \sigma^2)$ are added to each gene of the chromosome of the child individuals. Thereby, mutations are in charge of only local searches and thus searches can be performed effectively in the last stages of the search.

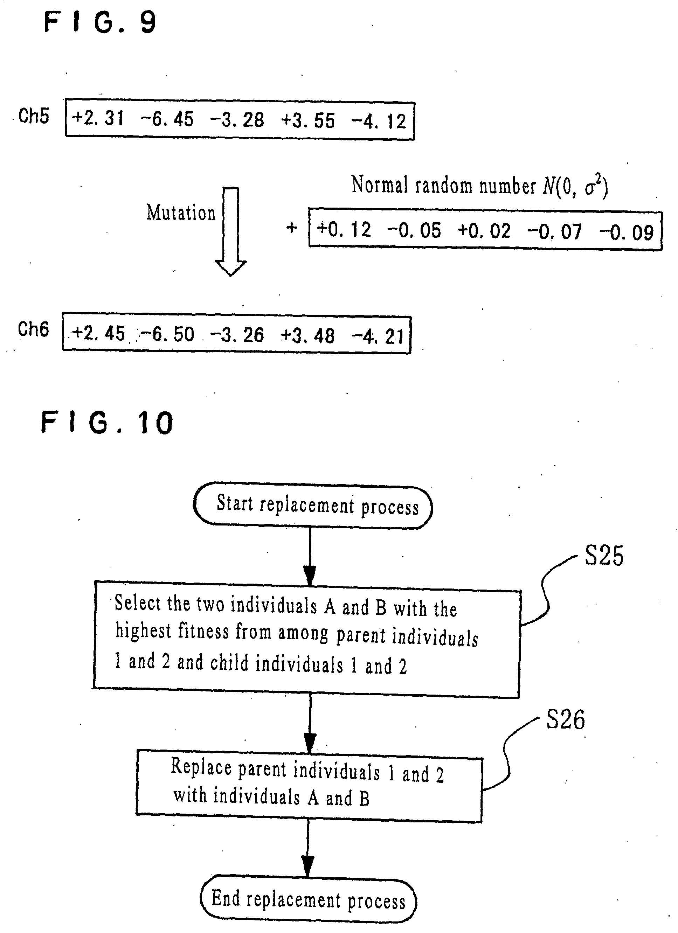

To describe mutation according to this Embodiment with the sample chromosome of FIG. 9, when chromosome Ch5 has the values
(+2.31 -6.45 -3.28 +3.55 -4.12) and the random numbers generated independently according to the normal distribution for each gene are
(+0.12 -0.05 +0.02 -0.07 -0.09) adding these to the chromosome Ch5 gives the chromosome Ch6 which is changed to
(+2.45 -6.50 -3.26 +3.48 -4.21).

If the standard deviation of the normal distribution is made too large, the search becomes the same as a random search, so preliminary experiments are used to determine appropriate values. Note that the random numbers to be added may be based on a Cauchy distribution or other distribution in addition to a normal distribution.

(c) Selection method: the selection method of the genetic algorithm is a process in which the individuals to survive in the next generation are selected from within the population. In the present invention, as shown in the flowchart on FIG. 10, two parent individuals 1 and 2 are selected randomly from the population, and these are crossed and mutated to generate child individuals 1 and 2, and among the four individuals in the group of parent individual 1, parent individual 2, child individual 1 and child individual 2, select the two individuals A and B with the highest fitness values (Step S25) are selected, and the parent individuals 1 and 2 within the population are replaced with the two selected individuals A and B (Step S26). This replacement is a major characteristic in that the individuals in the population do not all change at once as what occurs in the typical genetic algorithm. Thereby, it is possible to perform the search with a small number of individuals in the population.

(f) Search end conditions: the search ends when the fitness of the individuals meets the stipulated conditions. Here, the condition may be when the maximum fitness within the population exceeds a predetermined threshold value, for example.

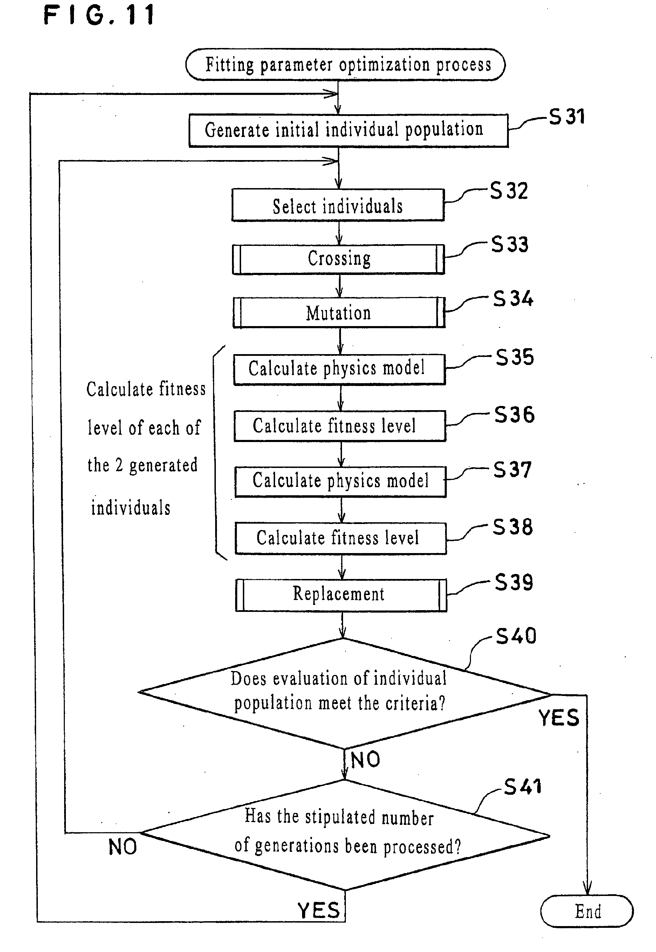

The flowchart in FIG. 11 will be used to describe the process of Embodiment 1 wherein the chromosome representation method, individual fitness values, crossover method, mutation method and search end conditions are determined and the genetic algorithm is used to perform fitting parameter optimization.

First, in Step S31, uniform random numbers are used to create a plurality of individuals as the initial population for the genetic algorithm. Thereby, the values of the genes in each chromosome of the initial population can be made random real-number values between an upper limit and a lower limit. However, if some type of preliminary knowledge is present regarding the trends in the optimal values of the fitting parameters, individuals who would be even more fit can be created as the initial population. Moreover, for each of the individuals in the initial population, its fitness is calculated, and then selection, crossover, mutation and replacement are performed sequentially to perform the search.

Then in the individual selection step in Step S32, two parent individuals 1 and 2 are randomly selected from the population and then the following genetic operation is performed on these individuals.

In the crossover in Step S33, as shown in FIG. 7, the child individuals 1 and 2 are created from the parent individuals 1 and 2 picked by selection and the randomly picked parent individual 3. It is noted that this crossover occurs on a certain probability (the crossover probability) $P_c$.

The mutation in Step S34 performed after the crossover in Step S33 changes the chromosomes by adding to the genes of the chromosomes of child individuals 1 and 2 a normal random number generated according to a Gaussian distribution $N(0, \sigma^2)$. It is noted that the probability of this mutation process occurring is $P_m$, called the mutation probability.

After the mutation process is complete in Step S34, the physics model is actually calculated with the values of the chromosomes of the child individuals 1 and 2 thus obtained (fitting parameter values), and the fitness values of the child individuals 1 and 2 are calculated (Steps S35-S38). When the fitness values of the child individuals 1 and 2 are thus calculated, next in Step S39, the individual replacement process is performed according to the procedure shown in FIG. 10. To wit, among the four individuals in the group of parent individual 1, parent individual 2, child individual 1 and child individual 2, the two individuals A and B with the highest fitness values are selected and the parent individuals 1 and 2 within the population are replaced with the two individuals A and B.

The aforementioned selection, crossover, mutation, evaluation and replacement operations are repeated until the search end condition is found to be met in the decision of Step S40, and then the optimization process is terminated and the individual with the highest fitness within the individual population at that point in time is used for the fitting parameters obtained from the genetic algorithm. It is noted that if the end condition is not met, the search is returned to Step S23 to continue the search.

Moreover, if no chromosome (fitting parameter value) that satisfies the search end condition is found after a fixed number of repetitions is performed, in Step S41 the current population is judged to have suffered premature convergence, so the process of generating the initial population is performed again. Naturally, there is no need to recreate the entire population, but rather it is sufficient to randomly generate 50% of the individuals therein and replace them, or it is also possible to issue a warning that the experimental results are not contained within a range that can be described by the physics model and halt processing.

It is noted that there are cases in which the searching speed of the genetic algorithm drops in the final stage of searching. This is because it is a global searching technique, so at the rate of reaching a certain local peak, it is not comparable to the steepest descent method or other local search techniques that use gradients. Thus, in order to shorten the searching time even further, after optimizing the parameters with the genetic algorithm, it is possible to combine the processing of Step S3 of FIG. 2 with a local search method (a modification of Embodiment 1). The method used as the local search technique may be the known steepest descent method, Newton method, quasi-Newton method or the like.

As described above, with the fitting parameter optimization method according to this Embodiment, the parameters of the physics model are represented directly as the chromosomes of a genetic algorithm, and the optimal fitting parameters are found so as to minimize the fitting error according to the genetic algorithm. Accordingly, there is no need for trial-and-error to select the initial parameters manually, and moreover, it is possible to determine the optimal fitting parameters of the physics model efficiently within a short computation time without being trapped in local peaks. Thereby, it is possible to increase the precision of prediction of the physical phenomena under study.

It is noted that in the aforementioned Embodiment 1, a genetic algorithm is used as the search technique. However, in the event that the number of local minima is small in the fitness of the genetic algorithm, it is possible to replace the genetic algorithm with an algorithm called the simulated annealing method. In addition, even in cases in which the number of local minima is large, while the performance obtained as a result of optimization is lower in comparison to that of the genetic algorithm, the searching can be done faster.

For details of the annealing method, see *Simulated Annealing and Boltzmann Machines* by E. Aarts and J. Korst, published in 1989 by John Wiley & Sons. The annealing method is one type of hillclimbing method, where a control parameter called temperature is used to prevent the search from being trapped in local minima.

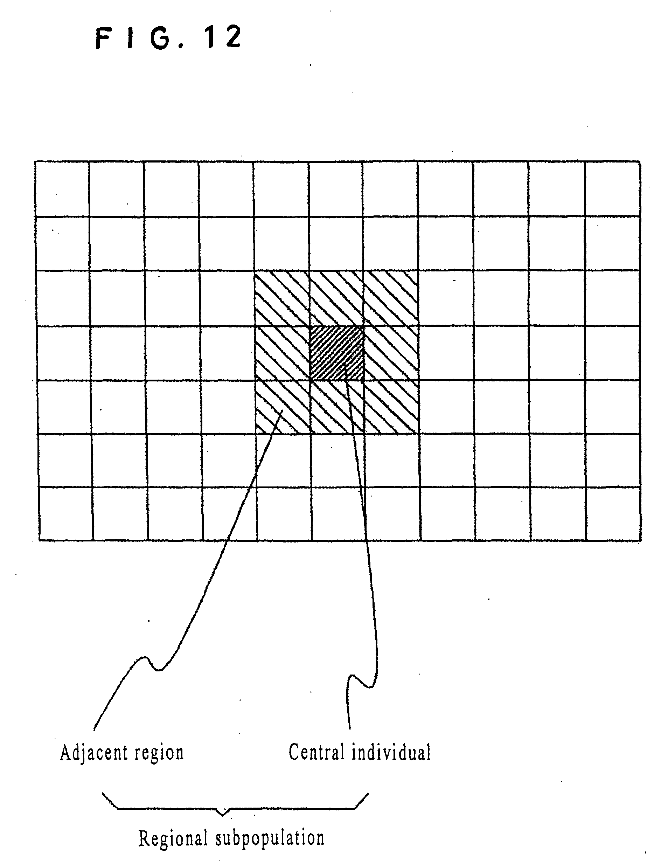

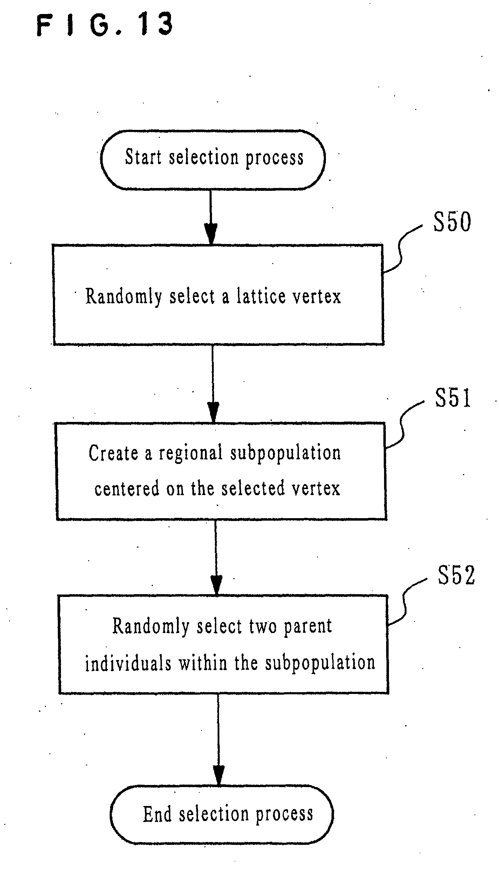

Here follows a description of a modification of this Embodiment made with reference to FIGs. 12 and 13. The physics model fitting parameter optimization problem may have a large number of local minima, so there are cases in which premature convergence occurs frequently and a sufficiently precise solution is not obtained. To solve this problem, the inventors proposed limiting the range of individuals within the population that are changed by the genetic algorithm (range in which the parents are selected in crossover) in order to give diversity to the genotypes within the population. Specifically, in Step S31 of FIG. 11, all of the individuals in the population are disposed upon the vertices of a multi-dimensional lattice, and regional subpopulations are formed from each individual and a fixed number of neighboring individuals. It is noted that the number of dimensions of lattice vertices and the number of neighboring individuals can be selected irregardless of the number of parameters, but as a result of numerical experiments, the ideal number of dimensions was found to be 2 or 3 and the ideal number of neighboring individuals was 4 to 8. FIG. 10 shows the case of a two-dimensional lattice where the number of neighboring individuals is 8. It is noted that in an *n*-dimensional lattice, the edges form a torus in order to achieve symmetry.

The genetic operation is performed locally in each of these regional subpopulations. To wit, in Step S32 of FIG. 11, the selection process in the flowchart shown in FIG. 13 is performed. First, in Step S50, one vertex is randomly selected from among all of the lattice vertices and in the next Step S51, a regional subpopulation centered upon the lattice vertex is formed from Step S50 and the neighboring individuals. Then in Step S52, parent individuals 1 and 2 are randomly selected from within the subpopulation.

With the process as described above, even in the case in which the fitness of a certain individual in the population is extremely high in the midst of the search, the number of cases in which that individual is selected as the parent in crossover is limited, and even if child individuals that resemble that individual arise from crossover, the child individuals are disposed within the subpopulation, so the effects of that individual are only gradually extended to the entire population through the overlapping of subpopulations. For this reason, the problem of premature convergence in which the entire population is rapidly unified to a single genotype does not easily arise, thereby maintaining the diversity of genotypes.

In addition, a parallel computer can be used as a fitting parameter optimization apparatus by allocating one processor to a single individual. In this case, the number of dimensions of the lattice and the number of neighboring individuals are determined depending on the processor topology of the parallel computer.

A practical application of the present invention is a materials design system that utilizes molecular dynamics. Molecular dynamics is a method by which the movements of the atoms that make up a substance are classically analyzed moment by moment, and with this simulation, it is possible to study the dynamic properties and structural stability of the material, and the dynamic behavior of the substance under certain conditions on the molecular and atomic level. An important point in performing molecular dynamics is that the interatomic potentials that greatly affect physical properties must not be determined in advance.

To wit, an approximate function type that describes the interatomic potential is postulated in advance and the potential parameters contained within that function are determined by fitting with appropriate experimental data. Potential functions become complex particularly in complex atomic arrangements, amorphous structures and states that are greatly distorted from a stable structure, so because the unknown parameters to be determined increase, there are many cases in which convergence does not occur with the typical least squares method. To solve this problem, the optimization method of the present invention may be used to perform the optimized fitting of parameters and increase the precision of a materials design system and improve the efficiency of work. For example, considered is the case of applying the present invention to the potential function of carbon atoms that reproduce an amorphous structure. The physics model function to be postulated is represented by equation (2).

$$\Phi = \sum_{i=1}^{N} \sum_{j>1}^{N} f_c(r_{ij})[a_{ij}f_R(r_{ij}) + b_{ij}f_A(r_{ij})] \tag{2}$$

where,

$$f_R(r_{ij}) = A_{ij}exp(-\lambda_{ij}r_{ij}), f_A(r_{ij}) = -B_{ij}exp(-\mu_{ij}r_{ij})$$

$$f_c(r_{ij}) = \begin{cases} 1, & r_{ij} \langle R_{ij} \\ \dfrac{1}{2} + \dfrac{1}{2}cos\left[\dfrac{\pi(r_{ij} - R_{ij})}{(S_{ij} - R_{ij})}\right], & R_{ij}\langle r_{ij}\langle S_{ij} \\ 0, & r_{ij}\rangle S_{ij} \end{cases}$$

$$b_{ij} = x_{ij}\left(1 + \beta_i^{n_i}\zeta_{ij}^{n_i}\right)^{-1/2n_i},$$

$$\zeta_{ij}^{n_i} = \sum_{k(\neq i,j)} f_c(r_{ik}) g(\theta_{ijk}) exp[\gamma^3 (r_{ij} - r_{ik})^3],$$

$$g(\theta_{ijk}) = 1 + c_i^2 / d_i^2 - c_i^2 / [d_i^2 + (h_i - cos\theta_{ijk})^2]$$

$$a_{ij} = (1 + \alpha_i^{ni} \eta_{ij}^{ni})^{-1/2n_i}$$

$$\eta_{ij} = \sum_{k(\neq i,j)} f_c(r_{ik}) exp[\gamma^3 (r_{ij} - r_{ik})^3]$$

In equation (2), $r_{ij}$ is the length of the ij bond, $N$ is the number of atoms, $f_R$, $a_{ij}$ and $\eta_{ij}$ are functions related to repulsive forces, $f_A$, $b_{ij}$ and $\zeta_{ij}$ are functions related to attractive forces and $b_{ij}$ includes the effects of many-body effects. In addition, $f_c(r)$ is the cutoff function for interactions, $\theta_{ijk}$ is the bond angle between the ij bond and the ik bond, $R$ and $S$ are cutoff-related parameters, while $A$, $B$, $\lambda$, $\mu$, $\gamma$, $\beta$, $n$, $c$, $d$, $h$ and $\chi$ are other parameters. $\chi$ is 1 in the case of atoms of the same type, and in order to simplify the potential function, $\alpha_i = 0$ and $\mu = \gamma$ are assumed, so there are nine unknown parameters. These unknown parameters are fit to match the experimental results as closely as possible, and just how precisely the potential function is set is important for the materials design system.

For the experimental data, known methods of experimental physics are used to find a plurality of sets of $r_{ij}$, $\theta_{ijk}$ and the potential functions. These nine parameters are expressed as the chromosomes of a genetic algorithm and optimized so as to minimize the mean square error between the experimental data and the predicted results. As a result, it is possible to determine the potential functions for diamond crystals and amorphous structures with better precision than with conventional techniques.

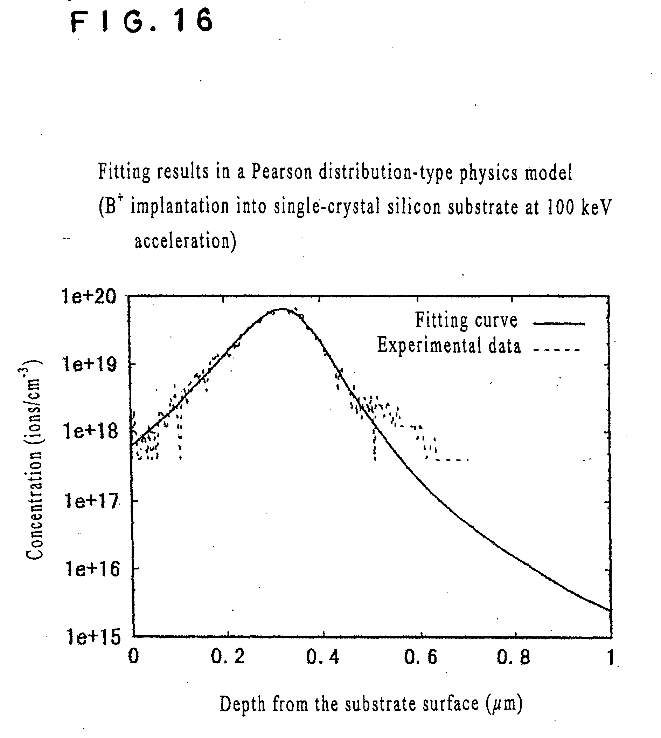

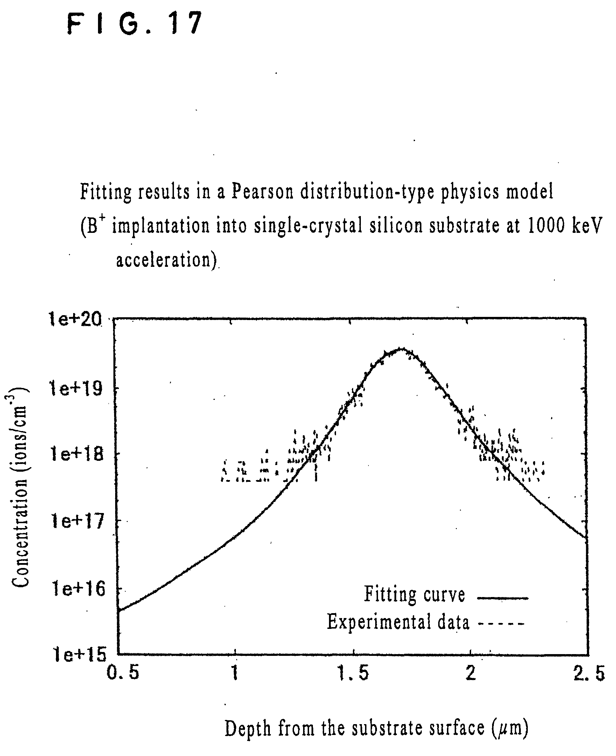

Next, FIG. 16 and FIG. 17 will be used to describe the experimental results of determining the fitting of parameters of a physics model by using the optimal fitting parameter determination method in the modification of Embodiment 1 of the present invention with respect to the results of measuring the $B^+$ concentration distribution (ion implantation distribution, ions/cm$^{-3}$) when $B^+$ ions were implanted into a single-crystal silicon substrate.

The measurement data for the $B^+$ concentration distribution was obtained when the dose (injected amount) was 1e+15 (ions/cm$^{-2}$) (here "1e+15" represents $10^{+15}$) and the concentration distribution was from ten sets of measurements at acceleration energies between 100 keV and 1 MeV in 100 keV increments. A physics model was proposed by fitting the Pearson IV distribution function in equation (3) to this measurement data.

$$\frac{df(s)}{ds} = \frac{(s-a)f(s)}{b_0 + b_1 s + b_2 s^2} \tag{3}$$

where,

$$s = x - R_p$$

$$\begin{cases} a = -\gamma\sigma_p(\beta + 3)/A \\ b_0 = -\sigma^2(4\beta - 3\gamma^2)/A \\ b_1 = a \\ b_2 = -(2\beta - 3\gamma^2 - 6)/A \end{cases}$$

where,

$$A = 10\beta - 12\gamma^2 - 18$$

$$\ln\left[\frac{f(s)}{f_0}\right] = \frac{1}{2b_2}\ln\left(b_0 + b_1 s + b_2 s^2\right) - \frac{b_1/b_2 + 2b_1}{\sqrt{4b_0 b_2 - b_1^2}}\tan^{-1}\left(\frac{2b_2 s + b_1}{\sqrt{4b_0 b_2 - b_1^2}}\right)$$

In the fitting optimization calculations with respect to experimental examples, the values of the fitting parameters $R_p$, $\sigma_p$, $\gamma$ and $\beta$ are lined up as the chromosomes of the genetic algorithm (number of parameters $n$ = 4). The initial values of the fitting parameters are set in the ranges $R_p$: 0.0 to 2.0, $\sigma_p$: 0.0 to 0.25, $\gamma$: -1.0 to 1.0 and $\beta$: 0.0 to 50.0. The evaluation function used for the genetic algorithm is the mean square error between the measured data values and the fitted Pearson IV distribution function values. It is noted that at the time of calculating the error, the common logarithm of the concentration value is used instead of the concentration value. In addition, in the range of ±20% from the center value of the distribution, the error is weighted by 10 times in the evaluation The limit conditions are $b_1^2 - 4b_0 b_2 < 0$, $b_2 < 0$ as in equation (3), and if these conditions are not met, the evaluation function value is taken to be ∞.

Taking the number of dimensions in the individual population of the genetic algorithm to be 2 and the number of neighboring individuals to be 8, the number of individuals in the population was set to 25 (5×5). The search was ended at the point when the evaluation function was evaluated 2500 times (the search end condition), and the fittest individual obtained in the final generation was subjected to optimization using the quasi-Newton method to obtain the ultimate solution.

FIG. 16 and FIG. 17 show the experimental results from the fitting optimization computation, in this experiment. In the graph, the horizontal axis is the depth (μm) from the surface of the substrate while the vertical axis is the concentration (logarithmic scale, units are ions/cm$^{-3}$), and the broken line shows the measured data for the concentration. The solid line is the physics model-fitting curve found from the optimization calculations in the modification of this Embodiment. FIG. 16 shows the case in which the experimental conditions included B$^+$ acceleration energy of 10 keV, while FIG. 17 shows the case in which the experimental conditions included the acceleration energy of 1 MeV. From FIG. 16 and FIG. 17, one can see that the physics model-fitting curve fits smoothly to the experimental data, demonstrating the effectiveness of the optimization fitting determination method according to the present invention.

Here follows a description of Embodiment 2 of the present invention. The sum of the mean square error between the experimental data and the predicted data calculated from the physics model is typically used as the evaluation criterion for fitting. However, even if an extreme error is present at one point, for example, if the error is evaluated to be small in the evaluation of the sum of the means square error, evaluation in terms of this sum of mean squares alone is insufficient for high-precision fitting, so evaluation of the maximum value of the absolute value of the error is also required.

When one attempts to perform optimization to a plurality of evaluation criteria simultaneously in this manner, with the conventional genetic algorithm, the weighted sum of a plurality of evaluation criteria is taken and made a single target function, and then this target function is optimized as the fitness. The solution thus obtained is greatly dependent on the weighting coefficients. However, the determination of whether predetermined weighting coefficients are valid or not can only be confirmed after various optimal solutions are obtained while changing the weighting coefficients of each of the plurality of evaluation criteria. Accordingly, it is necessary to perform trial-and-error to obtain satisfactory fitting parameters.

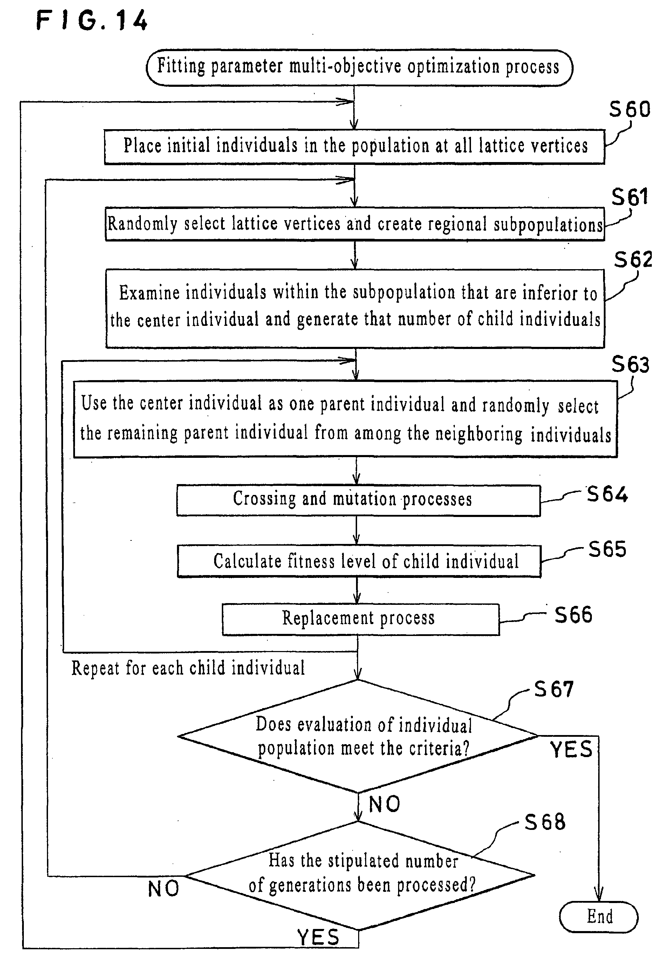

Thus, to solve this problem, the inventors invented a technique of using a genetic algorithm to directly find a solution (Pareto-optimal solution) to fit each of the evaluation criteria without using a plurality of weighted evaluation criteria. Here follows a description of the processing of Embodiment 2 of the present invention made with reference to the flowchart of FIG. 14.

FIG. 14 is a flowchart of the fitting parameter multi-objective optimization process, namely the process of optimization using a plurality of evaluation criteria. In the processing of Step S60 and Steps S61 through S63, there are differences from Step S31 and Step S32 respectively in the flowchart of FIG. 11. First, in Step S60 random numbers are used to generate the initial individuals of the genetic algorithm and these are placed at all of the lattice vertices as shown in FIG. 12. Next in Step S61, there are temporarily formed regional subpopulations consisting of the individual present at each randomly selected lattice vertex and the neighboring individuals centered upon it.

Next in Step S62, among the subpopulations thus formed, the individuals that are "inferior" to the center individual are examined and child individuals are generated by the number examined. However, even in the case that all of the neighboring individuals are superior to the center individual, one new child individual is created. It is noted that the expression "inferior" means that a certain individual is inferior to another individual in all of the evaluation criteria. Similarly, the expression "superior" means that it is superior in all of the evaluation criteria.

Next in Steps S63 and S64, child individuals of the number determined in Step S62 are generated through the crossover illustrated in FIG. 8, and mutations are also induced at that time. One of the parents in the crossover of Step S64 is the individual present at the center and the remaining parent is randomly selected from among the individuals present in the neighborhood. When a child individual is generated through crossover, the physics model is computed and the evaluated values of the plurality of criteria for that child individual are calculated.

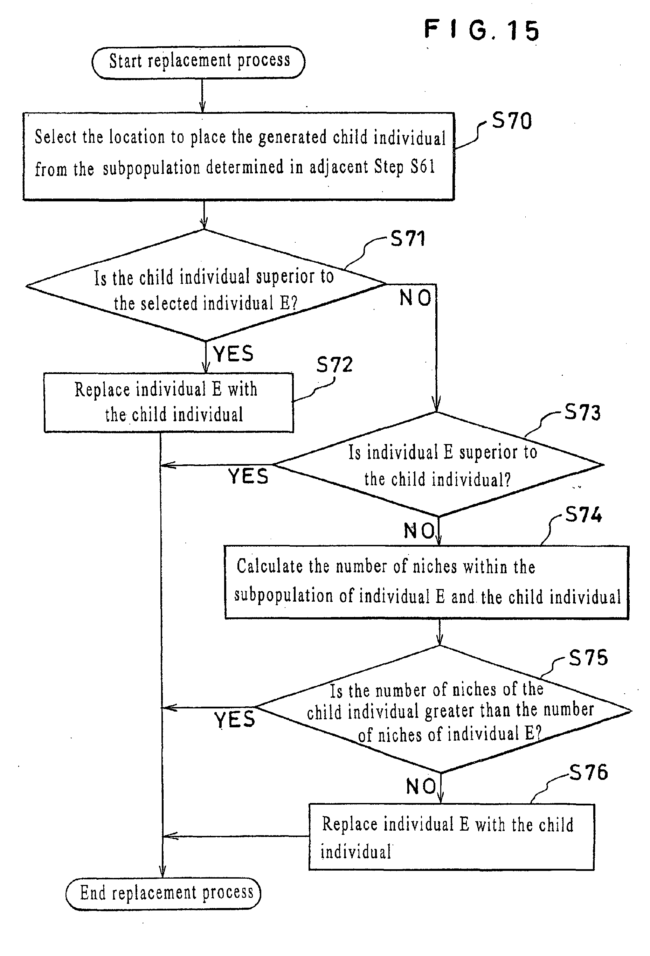

In Step S65, the fitness of the child individual is calculated by calculating the evaluation criteria, e.g. the mean square error. Next in Step S66, it is determined whether or not to perform the replacement process depending on the superiority relationship between the generated child individual and one individual (called individual E) selected randomly from within the subpopulation. Here follows a description of the replacement process made with respect to the flowchart of FIG. 15. In Step S71 of FIG. 15, if the child individual is superior to individual E, individual E is replaced with the child individual (Step S72). Conversely, if individual E is superior to the child individual, the replacement is not performed.

If neither is the case, it is determined whether or not to perform the replacement by means of the technique called sharing. Sharing replacement is specifically performed in Step S74 based on the calculated value of the number of niches of individual E and the child individual within the subpopulation. The number of niches $n_G$ is calculated by equation (4):

$$n_G = \sum_{H \in P} S(d(G, H)) \tag{4}$$

where,

$$S(d) = \begin{cases} 1 - d/\sigma & (0 \le d \le \sigma) \\ 0 & (d > \sigma) \end{cases}$$

In equation (4), $P$ represents the entire subpopulation while $d(G, H)$ represents the Euclidean distance between individuals G and H in the parameter space. In addition, $\sigma$ is a given constant whereby individuals that are separated by more than this value are taken to be individuals that do not resemble each other at all. The value $n_G$ calculated by equation (4) is an index that indicates roughly how many individuals that are similar to a certain individual are present in the subpopulation.

Thus in Step S75, the number of niches of the child individual and individual E are compared, and if the number of niches of individual E is greater than the number of niches of the child individual, individual E is replaced with the child individual.

This process completes the replacement process of Step S66, so Steps S63 through S66 are repeated the same number of times as the number of child individuals determined in Step S62. Moreover, the optimization process ends when the search end condition is satisfied in the decision of Step S67. Then in Step S4, the user selects the most suitable fitting parameter from among the Pareto-optimal solutions obtained as a result of the search, and this is made a parameter of the physics model. It is noted that if the end condition is not met in Step S67, the search is returned to Step S61 to continue the search.

Moreover, if no chromosome (fitting parameter value) that satisfies the search end condition is found after a fixed number of repetitions is performed, in Step S68 the current population is judged to have suffered premature convergence, so the process of generating the initial population is performed again. Naturally, there is no need to recreate the entire population, but rather it is sufficient to randomly generate 50% of the individuals therein and replace them, or it is also possible to issue a warning that the experimental results are not contained within a range that can be described by the physics model and halt processing.

In the aforementioned Embodiment 2 of the present invention, a plurality of fitting evaluation criteria are used and these are not unified by means of weighting coefficients but rather a genetic algorithm is used to directly search for a plurality of Pareto-optimal solutions. Accordingly, there is no need for manual trial-and-error to select weighting coefficients, but rather it is possible to discover fitting parameters for the physics model that are optimal for several evaluation criteria simultaneously.

Here follows a description of Embodiment 3 of the present invention. In Embodiment 1 and Embodiment 2 of the present invention, the fitting parameters are determined for a single set of measurement data to be fitted (results under a single experimental condition). However, in the actual measurements, a certain experimental condition is often varied over a number of stages, and sets of measurement data are acquired at each stage. In this case, there is a plurality of sets of experimental data. In the $B^+$ implantation experiment (FIG. 16, FIG. 17), the acceleration energy that is one experimental condition is varied over ten stages, so ten sets of measurement data are acquired.

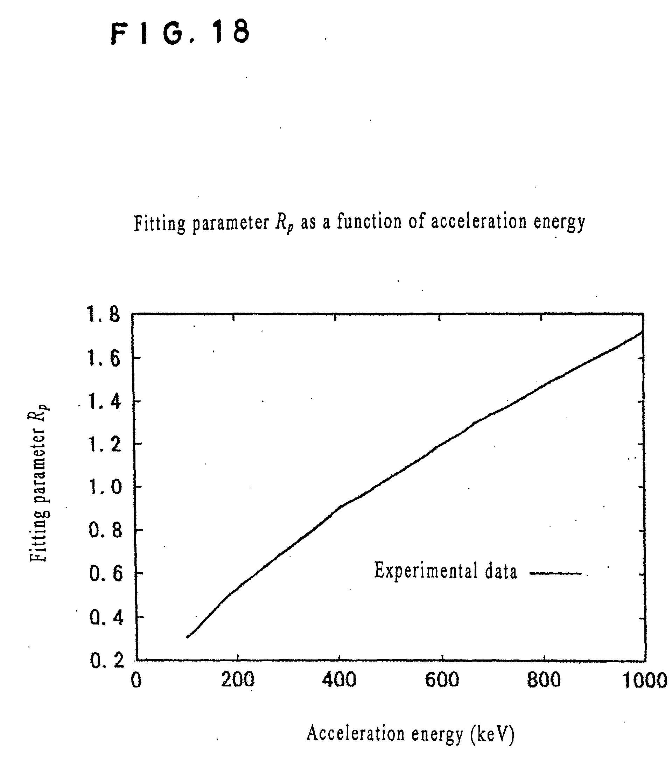

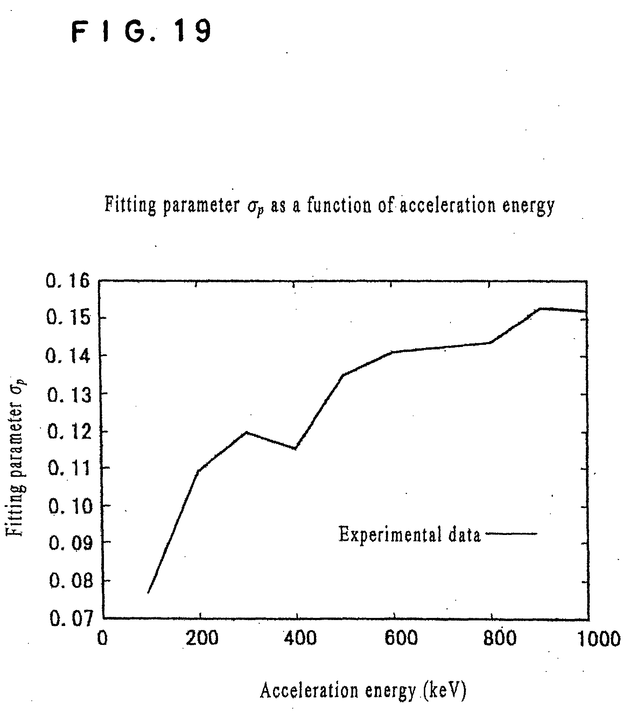

If there is a plurality of sets of measurement data in this manner, the fitting parameters are often determined independently for each set of measurement data. (Embodiments 1 and 2 fall into this category.) In this case, if the relationship between the fitting parameters thus determined and the varying experimental condition is plotted, there are cases in which it does not vary smoothly. FIGs. 18 to 21 are graphs of the fitting parameters as functions of the acceleration energy value (experimental condition). From FIGs. 18 to 21, one can see that while the fitting parameters $R_p$ and $\sigma_p$ vary somewhat smoothly with respect to the acceleration-energy $E$, fitting parameters $\gamma$ and $\beta$ do not vary smoothly.

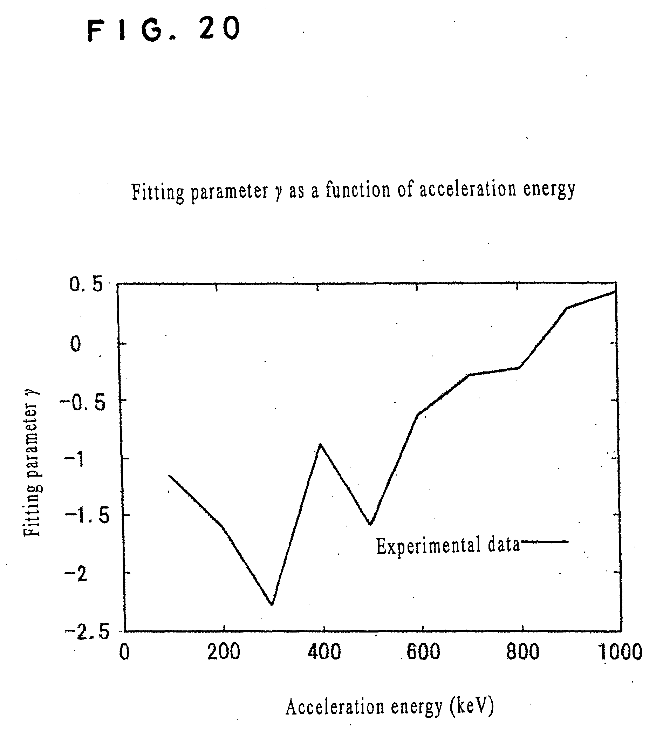

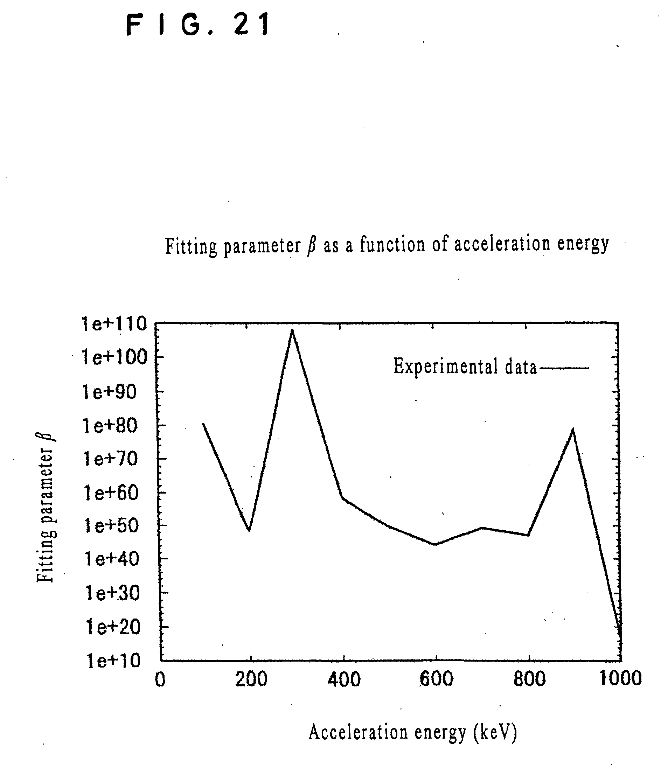

In the event that the fitting parameters do not vary smoothly as in FIGs. 20 and 21, problems occur when finding a physics model. At the time of the calculation of the physics model, under experimental conditions at which experiments had not been performed, it is necessary to find the parameters by interpolating between the fitting parameters already obtained experimentally. For example, among the aforementioned experiments, no experiment was performed in the case of acceleration energy of 150 keV.

In this case, the fitting parameters would be approximated by taking the average of the fitting parameters obtained from the measurement data in the cases of acceleration energies of 100 keV and 200 keV at which experiments had already been performed. For this reason, if the determined fitting parameters do not vary smoothly, the interpolated parameters will vary sharply, so a valid simulation based on the physics model cannot be done.

To solve this problem, Embodiment 3 of the present invention is a method of collectively determining the optimal fitting parameters by fitting parameters so that the fitting parameters vary smoothly in between the experimental conditions obtained based on measurement data.

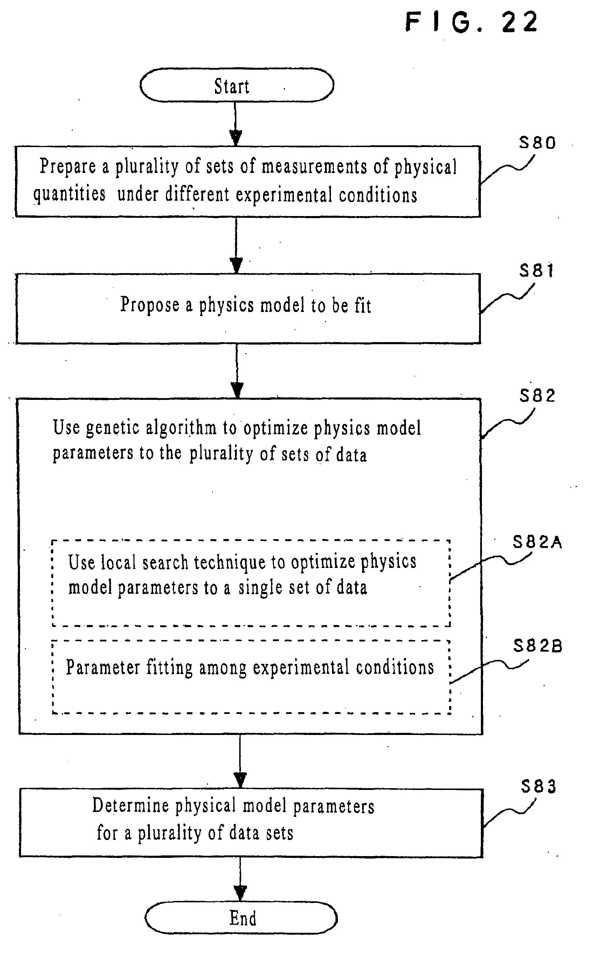

FIG. 22 is a flowchart of the process of determining the optimal fitting parameters of a physics model according to Embodiment 3 of the present invention. Embodiment 3 differs from Embodiments 1 and 2 on the point that Step S80 and Steps S82 and S83 are performed. Steps S82A and S82B are equivalent to Steps S35 to S38 of FIG. 11. First, in Step S80, plural sets of discrete measurements of physical quantities are prepared by varying the experimental condition in a stepwise manner as in Embodiment 1.

In the next Step S81, a physics model to be fit to the measurement data is proposed, and in the next Step S82, the technique of the genetic algorithm to be described later is used to optimize the parameters of the physics model proposed in Step S82A to the sets of measurements for each experimental condition. Moreover in Step S82B, a collective fitting of the changes in the fitting parameters between the experimental conditions is performed so that they are smooth, and finally in Step S83, the parameters of the final physics model are determined.

Here follows a description of the technique of the genetic algorithm used in this Embodiment 3. In this genetic algorithm, in order to avert an increase in the computation time in Step S82 that occurs because a plurality of parameters are determined simultaneously, a known local search technique is also used in Step S82. In Step S82, there is no need to also use this local search technique if there is no increase in the computation time.

In addition, in order to quantitatively evaluate the smoothness of the fitting parameters in between the experimental conditions, in Step S82B, a further fitting of the fitting parameters in between the experimental conditions is performed using a smooth function (fitting function) and the results of it are used in the calculation of the evaluation function (fitness) in the genetic algorithm.

Here follows a detailed description of Embodiment 3 of the present invention.

(a) Method of representing chromosomes: in this Embodiment, the chromosome representation in the genetic algorithm is such that the parameters of the physics model in the respective experimental conditions are lined up in a sequence. The structure of chromosomes in the genetic algorithm is such that there is a one-to-one correspondence between the genes and the physics model's parameter values ($\alpha_j$, $\beta_j$, $\gamma_j$, $\theta_j$, $\phi_j$) for the experimental condition $j$ ($j = 1, ..., m$)

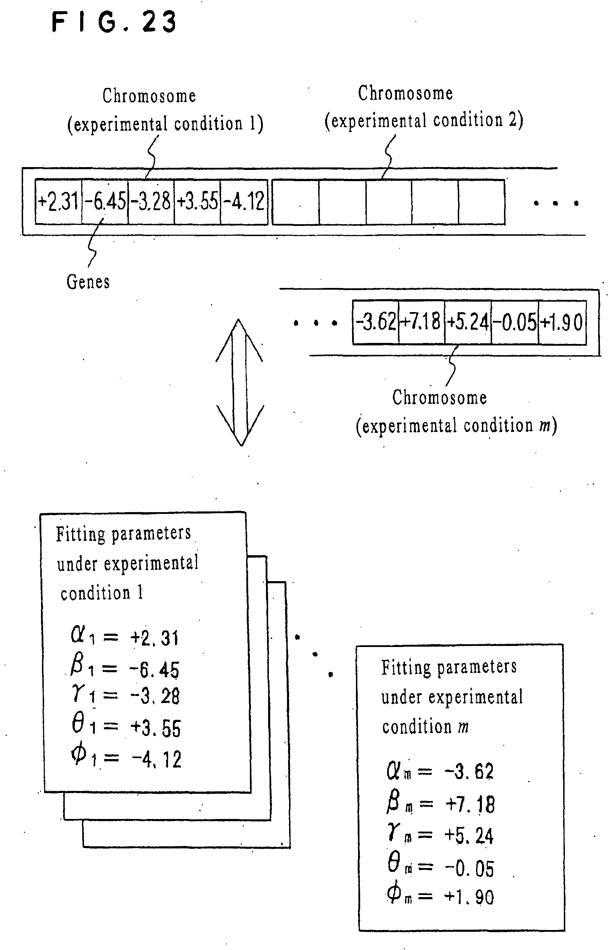

In the example of FIG. 23, when the physics model's parameter values are (+2.31, -6.45, -3.28, +3.55, -4.12), the genetic algorithm's chromosome corresponding to experimental condition 1 becomes (+2.31, -6.45, -3.28, +3.55, -4.12). In the example of FIG. 23, the number of parameters, namely the number of genes is $5 \times m$ and this number is different depending on the physics model proposed. When applied to the $B^+$ implantation experiment, the number of parameters becomes $4 \times 10 = 40$.

(c) Selection method: the method shown in Embodiment 1 for the selection method is used.

(d) Crossover method: the method shown in Embodiment 1 for the crossover method is used.

(e) Mutation method: a method is used as the mutation method, wherein the value of the gene is randomly initialized on a probability of $P_m$ for all genes.

(f) Search end conditions: the search ends when the fitness of the individuals meets the stipulated conditions. Here, the condition may be when the maximum fitness within the population exceeds a predetermined threshold value, for example.

(b) Individual evaluation function: the individual evaluation function of the genetic algorithm, namely the fitness used, is the mean square error (Ex. 1 of FIG. 6) calculated for each experimental condition and added over all experimental conditions. However, before calculating the mean square error, for each of the experimental conditions, optimization of the fitting parameters is performed using the local search technique for shortening the computation time. As the initial value of the local search technique (search start point), a value stipulated in the chromosome is used.

The quasi-Newton method may be used as the local search technique. Other known techniques may be used, such as the steepest descent method or Powell method. By means of this operation, known techniques are used for localized optimization and the initial values of the known techniques are optimized globally with the genetic algorithm, so each technique is applied to the portion in which it excels, thus suppressing the increase in computation time accompanying an increasing number of parameters.

Local optimization means precisely finding the values of local minima. Global optimization means, when a plurality of local minima are present within the search space, performing a search among as many partial spaces as possible so as not to be trapped in a single local minimum. In this sense, in the cases of Embodiment 1 and Embodiment 2, the genetic algorithm is applied to both local optimization and global optimization. With the genetic algorithm according to the present invention, global optimization is performed in the crossover of individuals within the population and in the initial stages of searching, while local optimization is performed in the final stages of searching.

However, in the crossover and mutation steps, the operations perform searches randomly without using gradient information, so if the number of parameters to be optimized increases, then the computing time required to perform local optimization to high precision becomes large. To solve this problem, in Embodiment 3, a known local search technique is used for local optimization to shorten the computing time.

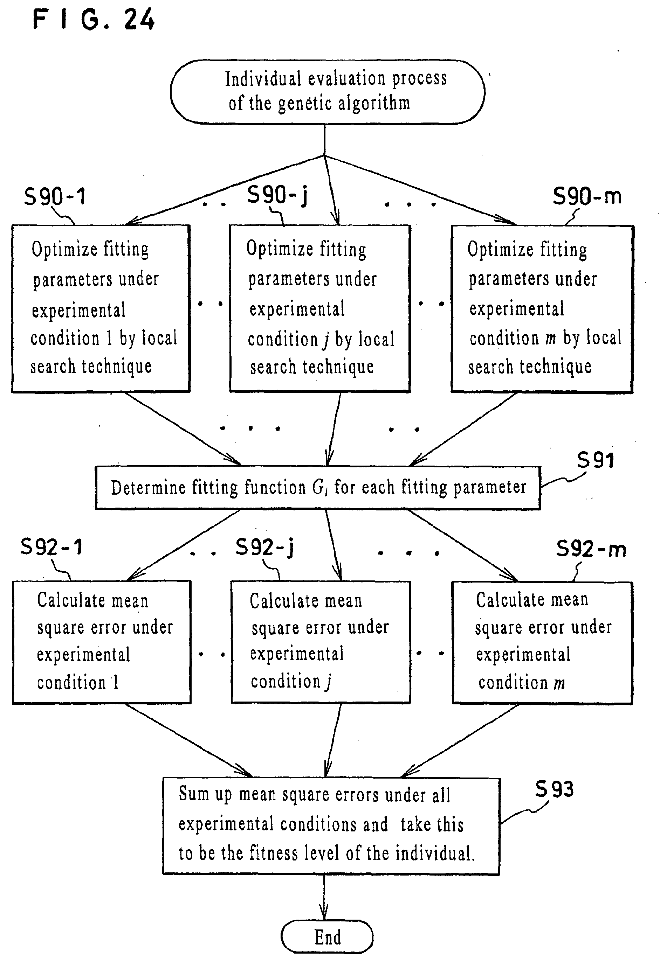

With the evaluation function described in (b) in Embodiment 3 above, it is still not possible to quantitatively evaluate (detect) the smoothness of the fitting parameters among the experimental conditions. FIG. 24 is a flowchart of the process of evaluating individuals with the genetic algorithm, specifically a flowchart of the processing of Steps S82A and S82B of FIG. 22, where the fitness of individuals is calculated in consideration of the aforementioned smoothness. These steps are performed between the mutation process and the replacement process. First in Step S90 (S90-1 through S90-$m$), as described above, the quasi-Newton method is used to optimize $n$ fitting parameters each independently under $m$ experimental conditions. In the next step S91, the fitting parameter thus found is independently fitted for each parameter with a smooth function (fitting function) that takes the varied value of the experimental condition as an argument.

In the $B^+$ implantation experiment (FIG. 16, FIG. 17), the experimental condition varied is the value of the acceleration energy $E$. As the smooth function, the function in equation (5) below can be used. The method of fitting this smooth function used may be the method of Embodiment 1 or Embodiment 2, or it may be the quasi-Newton method that can shorten the computing time.

In the case of the $B^+$ implantation experiment, taking the acceleration energy $E$ as the argument, the 10 (number of experimental conditions) $\times$ 4 (number of parameters) = 40 fitting parameter values are fitted to 10 data items independently for each parameter ($R_p$, $\sigma_p$, $\gamma$, $\beta$). As a result of this fitting, four sets of the fitting parameters $q_i$, $r_i$ and $s_i$ of equation (5) below are found for each parameter.

$$G_i(E)= q_i E^{r_i}+ s_i \tag{5}$$

Next in Step, S92 (S92-1 through S92-$m$), the smooth function (fitting function) found in Step S91 is used to calculate the fitting parameters of the physics model under each experimental condition and that value is used to recalculate the mean square error with respect to the measured data.

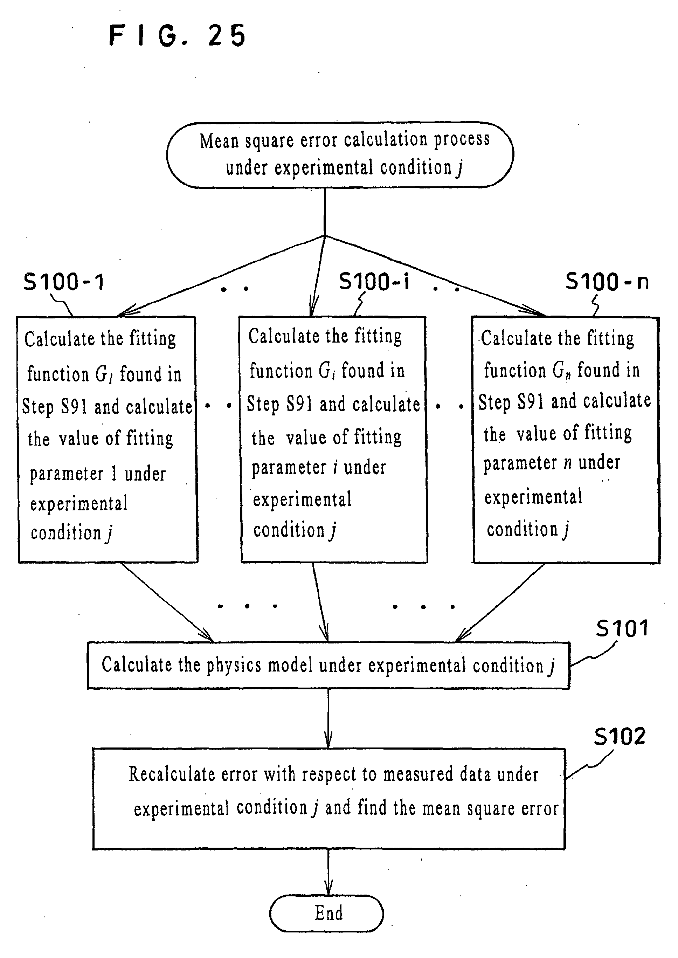

FIG. 25 is a detailed flowchart. First in Step S100 (S100-1 through S100-$n$), the fitting function found in Step S91 is used to calculate the value of the fitting parameter of the physics model under experimental condition $j$ for each parameter. In the case of the $B^+$ implantation experiment, under experimental condition 1 for example, the acceleration energy is 100 keV, so $E = 100$ is substituted into equation (5) and the values of $q_i$, $r_i$ and $s_i$ found in Step S91 are used to calculate the parameters $R_p$, $\sigma_p$, $\gamma$ and $\beta$, respectively.

Next in Step S101, the fitting parameters calculated in Step S100 (S100-1 through S100-$n$) are used to establish the physics model under experimental condition $j$, and that physics model is used to simulate the experiment under experimental condition $j$. For example, in the case of experimental condition 1 in the $B^+$ implantation experiment, the $B^+$ ion concentration distribution is simulated in the case that the acceleration energy is 100 keV.

In the final Step S102, the error between the results of the simulated experiment in Step S101 and the actual measurements under experimental condition *j* is calculated, and the final mean square error under experimental condition *j* is calculated. For example, in the case of experimental condition 1 in the $B^+$ implantation experiment, the mean square error between the measured values indicated by broken lines in FIG. 16 and the results of the simulation is calculated.

In Step S92, the aforementioned steps S100 through S102 are executed for each experimental condition to calculate the mean square error under each experimental condition. Lastly in Step S93, the mean square errors under each experimental condition calculated in Step S92 (S92-1 through S92-*m*) are summed up to give the collective fitness of individuals in the genetic algorithm. It is noted that when adding the mean square errors, it is possible to give weighting to certain experimental conditions if those experimental conditions are to be emphasized.

With the aforementioned parameter fitting optimization method, as illustrated in the examples of FIG. 20 and FIG. 21, if non-smooth data is fit with a smooth function, the fitting parameters determined by the recalculation of Step S101 will be greatly shifted from the values found independently under the various experimental conditions in Step S90, so the final mean square error in Step S92 increases. Thereby, the smoothness of the fitting parameters among the experimental conditions can be detected quantitatively.

In this manner, the method of representing chromosomes, individual fitness values, crossover method, mutation method, selection method and search end conditions are determined, and the genetic algorithm is used to perform collective optimization of fitting parameters. The process flow in the Step S82 portion of FIG. 22 may be made nearly the same process as in Embodiment 1 of FIG. 11. Here follows a description of the portions that are different from Embodiment 1 of FIG. 11.

First, the processes of Steps S35-S38 of FIG. 11 may use the evaluation processes of FIG. 24, respectively. In addition, the mutation process of Step S34 may use the method described in (e) above. After the optimization process in Step S40 is complete, in Step S83 of FIG. 22, the group of fitting parameters found in Step S100 (Steps S-1 through S100-*n*) of the individual with the highest fitness within the individual population at that point in time is set as the fitting parameters obtained by the genetic algorithm. In addition, the fitting parameters of the physics model for the experimental conditions that had not been measured can also be calculated simply using the smooth function found in Step S91.

Here follows the calculated results of applying the optimal fitting parameter determination method using the genetic algorithm according to this embodiment to the data in the $B^+$ implementation experimental results.

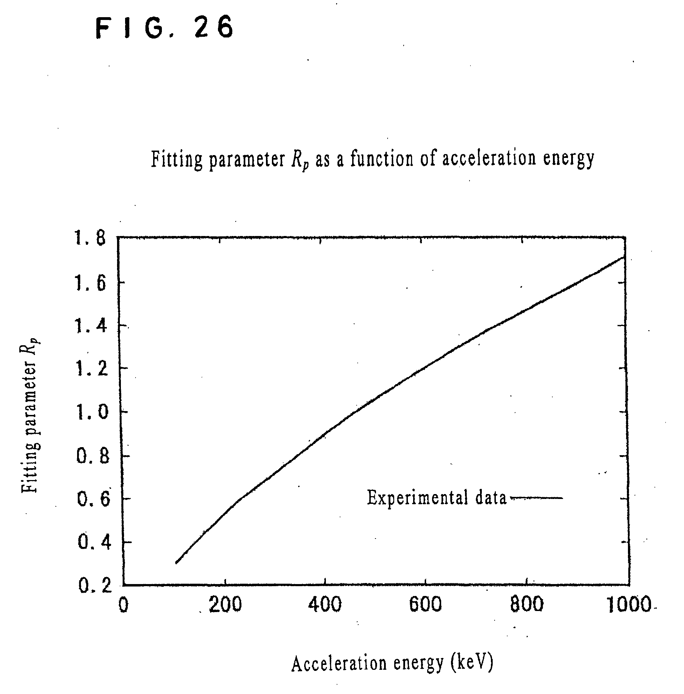

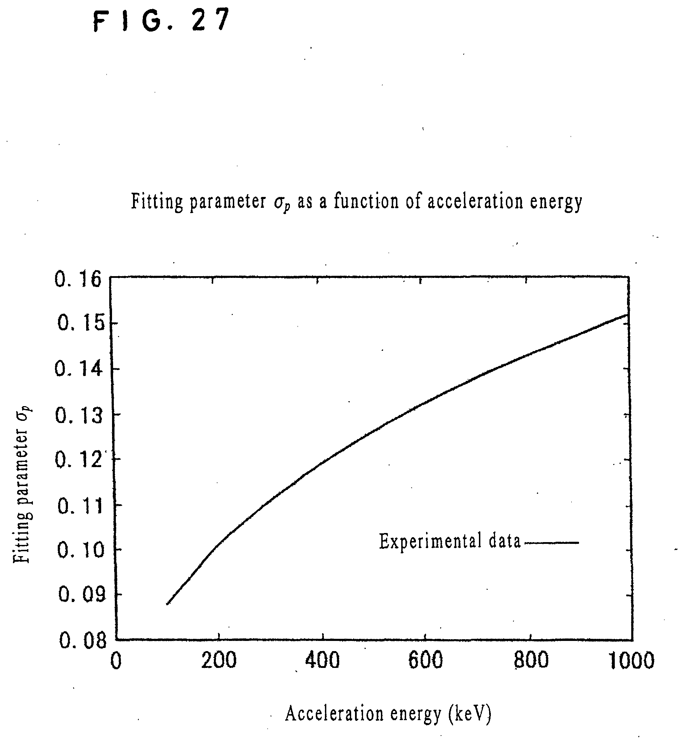

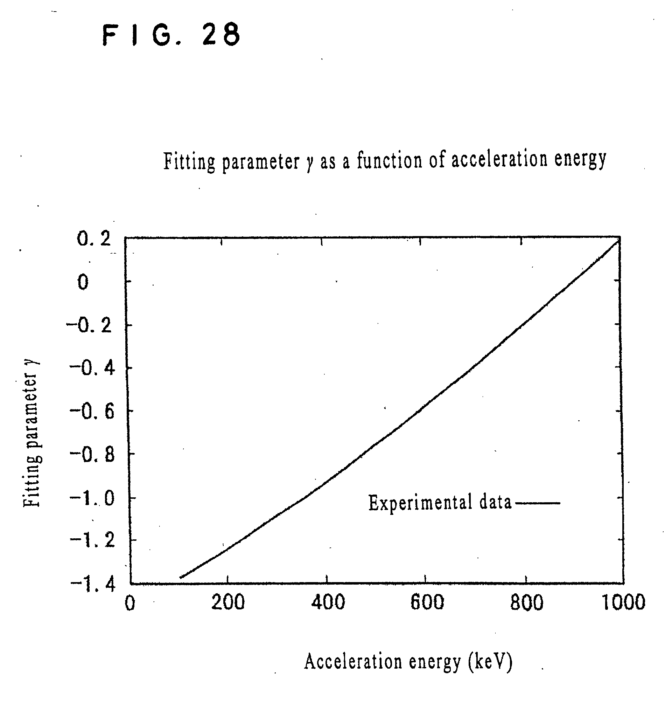

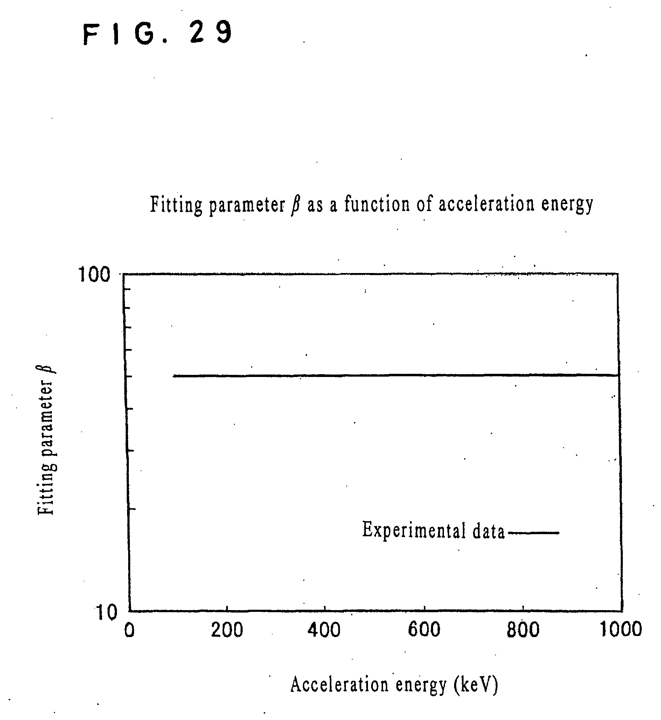

The proposed physics model, boundary conditions and experimental conditions are the same as in Embodiment 1. FIGs. 26 to 29 show the fitting parameters obtained as a result of the experiment. In comparison with the experimental results of FIGs. 18 to 21, one can see that the parameters are smoothly fitting-optimized with respect to the acceleration energy. The results of optimal fitting of the physics model to measured data show a good fitting nearly identical to FIG. 16 and FIG. 17. This experiment confirmed the effectiveness of the optimization method of Embodiment 3.

As described above, with the fitting parameter optimization method according to this embodiment, even in the case in which a plurality of experimental conditions are present, it is possible to find collectively optimal fitting parameters of physics models in consideration of the smoothness of fitting parameters between experimental conditions. Accordingly, there is no need for manual trial-and-error to obtain smooth fitting parameters, and it is possible to efficiently optimize the fitting parameters of physics models during short computing times. Thereby, an optimized physics model can be used in Technology CAD (TCAD) or other design tools.

The present invention provides an optimal fitting parameter determination apparatus that works the methods of Embodiments 1-3.

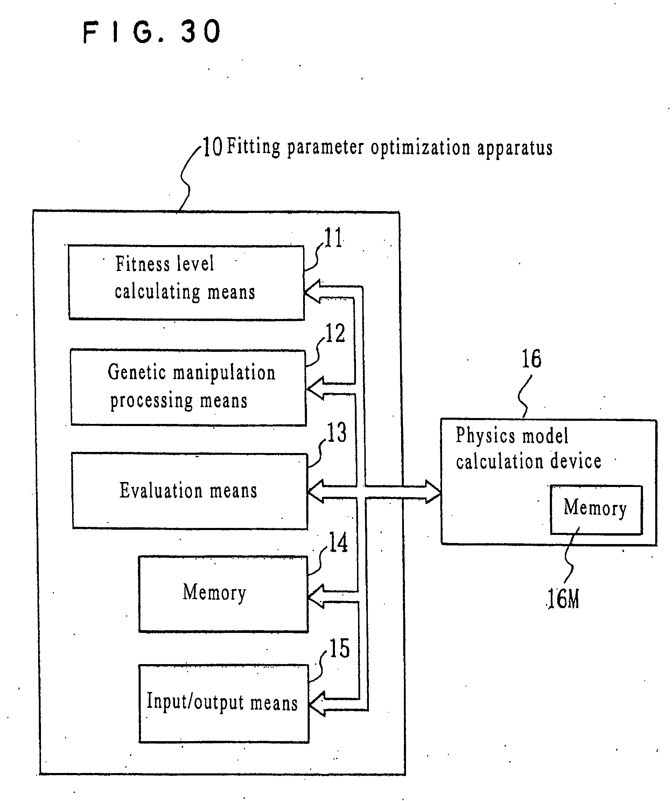

FIG. 30 is a functional block diagram of the optimal fitting parameter determination apparatus that works the methods of Embodiment 1 and Embodiment 2. The fitting parameter optimization apparatus 10 has a fitness calculating means 11 that calculates the fitness of an individual, a genetic operation processing means 12 that selects an individual from among an individual population and performs crossover, mutation, replacement and other genetic operations, an evaluation means 13 that evaluates whether or not the individual population has met the search end condition, a memory 14 and an input/output means 15. The fitness calculating means 11, genetic operation processing means 12 and evaluation means 13 may each consist of an independent CPU or one CPU may be used in a time-sharing manner.

A CPU starts up a stipulated program stored in a stipulated region of the memory 14 and executes various processing steps according to that program. The memory 14 stores individual information (chromosomes, fitness) for the genetic algorithm. A physics model calculation device 16 has a memory 16M and a CPU, and calculates the physics model according to a stipulated program stored in a stipulated region of the memory 16M, and outputs the results.

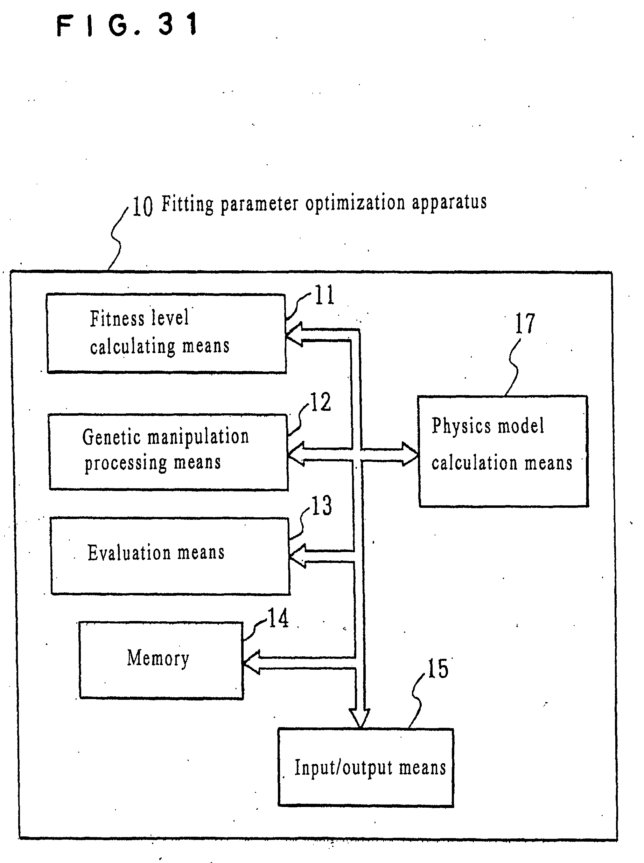

The physics model calculation device 16 may also be included within the fitting parameter optimization apparatus 10. In this case, as shown in FIG. 31, the fitting parameter optimization apparatus 10 would include the fitness calculating means 11, genetic operation processing means 12, evaluation means 13, memory 14 and a physics model calculation means 17, and the fitness calculating means 11, genetic operation processing means 12 and evaluation means 13 share the memory 14 and physics model calculation means 17.

In the optimization process, first a keyboard or the like within the input/output means 15 is used to select a physics model used to predict experimental data and that information is given to the physics model calculation device 16. In addition, the number of individuals in the population, crossover probability, mutation probability and other constants in the genetic algorithm are also given from the input/output means 15 to the fitting parameter optimization apparatus 10 and stored in a stipulated region of the memory 14. Thereafter, the CPU begins processing according to a stipulated program stored in a stipulated region of the memory 14.

In the fitness calculating means 11, after giving experimental data, a signal to start the physics model calculation is given to the physics model calculation device 16. When the physics model calculation device 16 finishes calculating the physics model, the calculation result (simulation result) data is passed to the fitting parameter optimization apparatus 10. Using this data, the fitness calculating means 11 calculates the fitness that is stored in the memory 14. The genetic operation processing means 12 uses the fitness determined by the fitness calculating means 11 to perform various genetic operations and stores the results in the memory 14. The evaluation means 13 calculates the end condition for the genetic algorithm and if it is met, the final optimal fitting parameters are determined and stored in the memory 14 and also output on a printer or CRT within the input/output means 15.

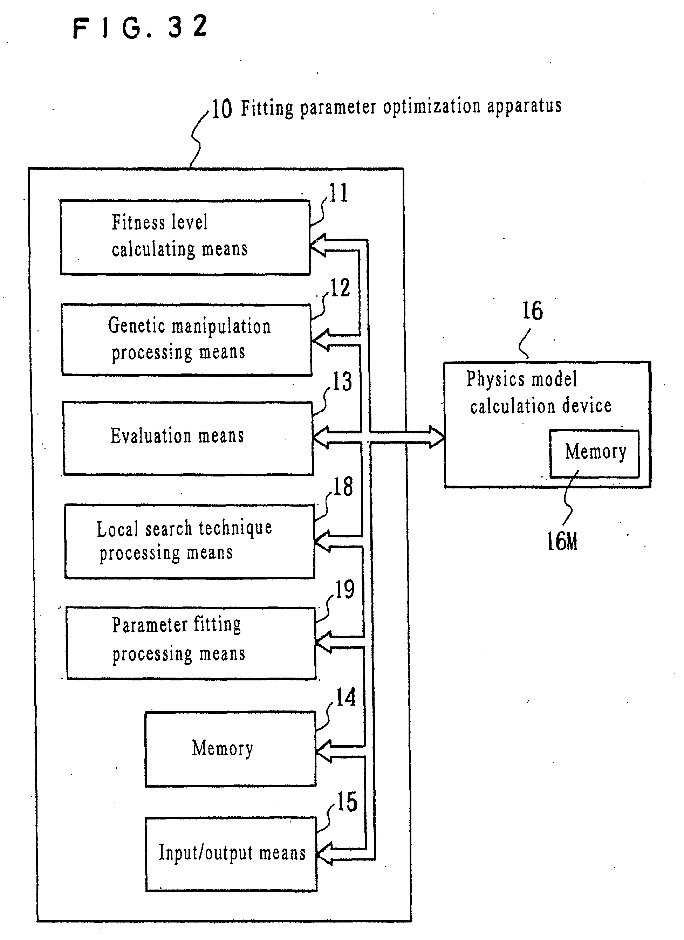

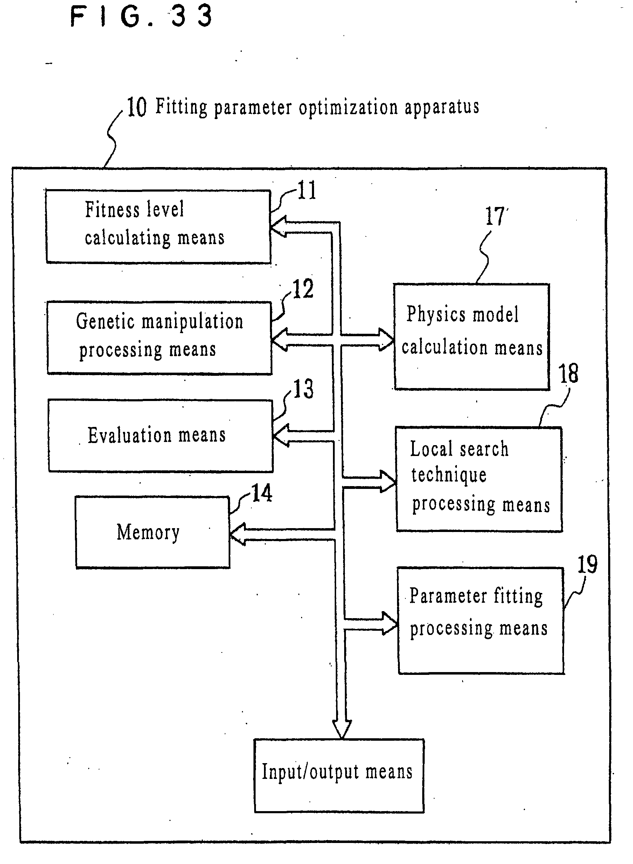

FIG. 32 is a functional, block diagram of the optimal fitting parameter determination apparatus that works the optimal fitting parameter determination method of Embodiment 3. As in FIG. 30, the fitting parameter optimization apparatus 10 has a fitness calculating means 11, genetic operation processing means 12, evaluation means 13, memory 14, input/output means 15 and also has a local search technique processing means 18 and parameter fitting processing means 19. The fitness calculating means 11, genetic operation processing means 12, evaluation means 13, local search technique processing means 18 and parameter fitting processing means 19 may each consist of an independent CPU or one CPU may be used in a time-sharing manner. As in FIG. 31, the physics model calculation device 16 may also be included in the fitting parameter optimization apparatus 10 as shown in FIG. 33.

In the optimization process, first a keyboard or the like within the input/output means 15 is used to select a physics model used to predict experimental data and that information is given to the physics model calculation device 16. In addition, the number of individuals in the population, crossover probability, mutation probability and other constants in the genetic algorithm are also given from the input/output means 15 to the fitting, parameter optimization apparatus 10 and stored in a stipulated region of the memory 14. Thereafter, the CPU begins processing according to a stipulated program stored in a stipulated region of the memory 14.

In the fitness calculating means 11, after giving experimental data under various conditions, a signal to start . the local optimization calculation is given to the local search technique processing means 18. The local search technique processing means 18 repeatedly exchanges data with the physics model calculation device 16 and performs local optimization calculations. When the local search technique processing means 18 finishes the local' optimization calculation, the calculation result data is stored in the memory 14. The local search technique processing means 18 performs the local optimization calculation the same number of times as the number of experimental conditions and all of the calculation results are passed to the fitness calculating means 11 via the memory 4.

Next, the fitness calculating means 11 sends a signal to the parameter-fitting processing means 19 to begin the fitting calculations based on a smooth function. The parameter fitting processing means 19 calculates and finds a fitting function for the fitting parameters in the local optimization calculation results stored in the memory 4. These calculation results are stored in the memory 14 and passed to the fitness calculating means 11.

The fitness calculating means 11 sends these fitting parameters to the physics model calculation device 16 and starts calculation in the physics model calculation device 16. The results of calculation from the physics model calculation device 16 are passed to the fitting parameter optimization apparatus 10 and stored in the memory 14. Using this data, the fitness calculating means 11 calculates the fitness that is stored in the memory 14. The genetic operation processing means 12 uses the fitness determined by the fitness calculating means 11 to perform various genetic operations and stores the results in the memory 14. The evaluation means 13 calculates the end condition for the genetic algorithm and if it is met, the final optimal fitting parameters are determined and stored in the memory 14 and also output on a printer or CRT within the input/output means 15.

Moreover, the present invention provides an optimal fitting parameter determination program executed by a computer that implements the procedures of the optimal fitting parameter determination method presented in FIG. 2, FIG. 3, FIG. 7, FIGs. 10-15, FIG. 22, FIG. 24 and FIG. 25. The optimal fitting parameter determination program according to the present invention may be installed from recording medium or the Internet via the input/output device of a computer consisting of the various means shown in FIGs. 30 to 33, for example, and stored in a single memory or plurality of memories. Thus, this computer becomes an optimal fitting parameter determination apparatus serving as the apparatus for working the method according to the present invention.

It goes without saying that the present invention is applicable to all of the parameters of a physics model containing a plurality of parameters, or some of the parameters, or the parameters of models formed by combining a plurality of models, so this application is not excluded from the scope of the present invention regardless of the scale of the physics model.

The present invention was described in the above with reference to the illustrated examples, but the invention is in no way limited to the aforementioned examples, but rather it includes other constitutions and modifications that a person skilled in the art may easily arrive at within the scope of the invention recited in the appended claims.

Industrial Applicability:

As described above, the following meritorious effects can be obtained with the present invention.

By representing the fitting parameters of a physics model with real-number vectors, preparing a population of a plurality of individuals having the chromosomes and using a genetic algorithm to optimize the fitting parameters, there is no need to discretize chromosome information, and the precision of the solution obtained and the computation time are not affected by the precision of discretization.

Moreover, by the genetic algorithm comprising at least: a selection step of selecting at least two parent individuals, a child individual generation step of generating a plurality of new child individuals by applying at least one of a group of genetic operations consisting of a crossover process and a mutation process to the selected parent individuals, and a replacement step of determining the individuals to be made individuals of the next generation of the population from among the selected parent individuals and the generated plurality of child individuals, extremely efficient searches can be performed without becoming trapped in local minima.

In the child individual generation step of the genetic algorithm, by the crossover process generating child individuals with real-number vectors having as components values appearing according to a continuous stipulated incidence probability distribution, and the incidence probability distribution being set based on the real-number vector components of each of the selected parent individuals, global searches can be performed in the initial stages of searches in which the distances among the parents within the population are large, while local searches can be performed in the final stages of searches in which the distances among parents are short.

In the child individual generation step of the genetic algorithm, by the mutation process that generates child individuals with real-number vectors having as components values appearing according to a continuous stipulated incidence probability distribution, and by the incidence probability distribution that is such that the incidence probability becomes higher the closer to at least one of the selected parent individuals, efficient local searches can be performed in the mutation process. In the selection step of the genetic algorithm,. by three parent individuals being selected and the incidence probability distribution being a normal distribution centered on the center points of two of the three selected parent individuals, and the standard deviation of the normal distribution being such that the component in the direction of the main axis connecting the real-number vectors of the two parent individuals is proportional to the distance between the two parent individuals, and the components in other axes being proportional to the distance between the main axis and the remaining one of the three selected parent individuals, while maintaining the distribution of the individual population, global searches can be performed in the initial stages of searches in which the distances among the parents within the population are large, while local searches can be performed in the final stages of searches in which the distances among parents are short.

By laying out the population of a plurality of individuals on lattice vertices, and in the selection step, regional subpopulations are formed from each individual and a stipulated number of neighboring individuals, and at least two parent individuals are selected from among the regional subpopulations, it is possible to eliminate premature convergence wherein the entire population is rapidly unified to a single genotype.

In the replacement step of the genetic algorithm, by selecting from among the selected parent individual and the generated plurality of child individuals, the individuals in which one evaluation criterion is superior as the individuals of the next generation of population, it is possible to shorten the computing time by reducing a plurality of evaluation criteria to a single evaluation criterion.

In the replacement step of the genetic algorithm, by selecting from among the selected parent individual and the generated plurality of child individuals, the individuals of the next generation of population determined based on a superiority relationship consisting of two or more evaluation criteria, it is possible to find collectively judged optimal fitting parameters based on a plurality of optimal solutions fit to each of the evaluation criteria.

By performing optimization by means of a local search technique with respect to the fitting parameters optimized using the genetic algorithm, it is possible to prevent deterioration of the searching speed in the final stages of the search and further increase the precision of fitting parameters.

By finding optimal fitting parameters for the physics models for each set of experimental conditions for measurement data, and also finding physics models wherein the fitting parameters are fitted using fitting functions so that the changes among experimental conditions are smooth, and collectively determining the optimal fitting parameters of the physics models for each experimental condition, it is possible to simulate physical phenomena with physics models without error even under experimental conditions at which experiments were not performed.

**Claims**

1. A method of determining optimal fitting parameters, comprising: in a physics model having a plurality of parameters, in order to determine optimal fitting parameters for discrete data points obtained by measurement of physical quantities, representing said plurality of parameters in a form of real-number vectors as information on chromosomes of a genetic algorithm, preparing a population of a plurality of individuals having said chromosomes and using the genetic algorithm to optimize fitting parameters.

2. The method of determining optimal fitting parameters according to claim 1, wherein said genetic algorithm comprises at least: a selection step of selecting at least two parent individuals, a child individual generation step of generating a plurality of new child individuals by applying at least one of a group of genetic operations consisting of a crossover process and a mutation process to the selected parent individuals, and a replacement step of determining individuals to be made individuals of a next generation of population from among the selected parent individuals and the generated new child individuals.

3. The method of determining optimal fitting parameters according to claim 2, wherein, in said child individual generation step, said crossover process generates child individuals with real-number vectors having as components values appearing according to a continuous stipulated incidence probability distribution, and said incidence probability distribution is set based on the real-number vector components of each of the selected patent individuals.

4. The method of determining optimal fitting parameters according to claim 2, wherein, in said child individual generation step, said mutation process generates child individuals with real-number vectors having as components values appearing according to a continuous stipulated incidence probability distribution, and said incidence probability distribution is such that an incidence probability becomes higher the closer to at least one of the selected parent individuals.

5. The method of determining optimal fitting parameters according to claim 3, wherein, in said selection step, three parent individuals are selected and said incidence probability distribution is a normal distribution centered on center points of two of the three selected parent individuals, and a standard deviation of the normal distribution is such that a component in a direction of a main axis connecting real-number vectors of said two parent individuals is proportional to a distance between said two parent individuals, and components in other axes are proportional to a distance between the main axis and a remaining one of the three selected parent individuals.

6. The method of determining optimal fitting parameters according to any one of claims 2 to 5, wherein said population of the plurality of individuals is laid out on lattice vertices, and in said selection step, regional subpopulations are formed from each individual and a stipulated number of neighboring individuals, and the at least two parent individuals are selected from among the regional subpopulations.

7. The method of determining optimal fitting parameters according to any one of claims 2 to 6, wherein, in said replacement step, from among the selected parent individuals and the generated new child individuals, individuals of the next generation of population are determined based on a superiority relationship consisting of one evaluation criterion.

8. The method of determining optimal fitting parameters according to any one of claims 2 to 6, **characterized in that**, in said replacement step, from among the selected parent individuals and the generated new child individuals, individuals of the next generation of population are determined based on a superiority relationship consisting of two or more evaluation criteria.

9. The method of determining optimal fitting parameters according to any one of claims 1 to 8, wherein optimization by means of a local search technique is performed with respect to the fitting parameters optimized using said genetic algorithm.

10. The method of determining optimal fitting parameters according to any one of claims 1 to 9, wherein said physics model is provided for each of different experimental conditions, a plurality of sets of measurement data are provided by varying each of the experimental conditions in a stepwise manner, optimal fitting parameters for the physics model are found for each set of measurement data by means of an optimization technique, said fitting parameters are fitted using fitting functions so that changes among the experimental conditions are smooth, and the optimal fitting parameters of the physics model for each experimental condition are determined collectively.

11. The method of determining optimal fitting parameters according claim 10, wherein said optimization technique is performed by means of a local search technique.

12. An optimal fitting parameter determination apparatus for a physics model having a plurality of parameters, comprising: fitness calculation means that, for discrete data points obtained by measurement of physical quantities, calculates a fitness based on measurement data and predicted values calculated from the physics model, genetic operation means wherein the plurality of parameters are represented in a form of real-number vectors as information on chromosomes of a genetic algorithm and genetic operations of the genetic algorithm are performed on a population of a plurality of individuals having said chromosomes, and judgment means that judges whether or not a next generation of the individual population meets an evaluation criterion, wherein an individual that has a highest fitness within the individual population when the next generation of the individual population meets the evaluation criterion is used for the optimal fitting parameters of said physical model.

13. The optimal fitting parameter determination apparatus according to claim 12, wherein said genetic operation means comprises at least: a selection processor that selects at least two parent individuals, a child individual generator that generates a plurality of new child individuals by applying at least one of a group of genetic operations consisting of a crossover process and a mutation process to the selected parent individuals, and a replacement processor that determines individuals to be made individuals of the next generation of the individual population from among the selected parent individuals and the generated new child individuals.

14. The optimal fitting parameter determination apparatus according to claim 13, wherein, in said child individual generator, said crossover process generates child individuals with real-number vectors having as components values appearing according to a continuous stipulated incidence probability distribution, and said incidence probability distribution is set based on real-number vector components of each of the selected parent individuals.

15. The optimal fitting parameter determination apparatus according to claim 13, wherein, in said child individual generator, said mutation process generates child individuals with real-number vectors having as components values appearing according to a continuous stipulated incidence probability distribution, and said incidence probability distribution is such that an incidence probability becomes higher the closer to at least one of the selected parent individuals.

16. The optimal fitting parameter determination apparatus according to claim 14, wherein, in said selection processor, three parent individuals are selected and said incidence probability distribution is a normal distribution centered on center points of two of the three selected parent individuals, and a standard deviation of the normal distribution is such that a component in a direction of a main axis connecting real-number vectors of said two parent individuals is proportional to a distance between said two parent individuals, and components in other axes are proportional to a distance between the main axis and a remaining one of the three selected parent individuals.

17. The optimal fitting parameter determination apparatus according to any one of claims 13 to 16, wherein said population of the plurality of individuals is laid out on lattice vertices, and in said selection processor, regional subpopulations are formed from each individual and a stipulated number of neighboring individuals, and at least two parent individuals are selected from among the regional subpopulations.

18. The optimal fitting parameter determination apparatus according to any one of claims 13 to 17, wherein, in said replacement processor, from among the selected parent individual and the generated new child individuals, individuals of the next generation of population are determined based on a superiority relationship consisting of one evaluation criterion.

19. The optimal fitting parameter determination apparatus according to any one of claims 13 to 17, wherein, in said replacement processor, from among the selected parent individual and the generated new child individuals, individuals of the next generation of population are determined based on a superiority relationship consisting of two or more evaluation criteria.

20. The optimal fitting parameter determination apparatus according to any one of claims 12 to 19, further comprising processing means that performs optimization by means of a local search technique with respect to the fitting parameters optimized using said genetic algorithm.

21. The optimal fitting parameter determination apparatus according to any one of claims 13 to 19, further comprising:

optimization means that, when a plurality of sets of measurement data are provided by varying each of experimental conditions in a stepwise manner, finds optimal fitting parameters for each set of measurement data by means of an optimization technique, and parameter fitting processing means that fits said fitting parameters using fitting functions so that changes among the experimental conditions are smooth, wherein said fitness calculation means calculates the fitness based on the fitting parameters found by said parameter fitting processing means.

22. The optimal fitting parameter determination apparatus according to claim 21, wherein said optimization means performs optimization by means of a local search technique.

23. An optimal fitting parameter determination program executed by a computer, that implements a process wherein: parameters of a physics model having a plurality of parameters are represented in a form of real-number vectors as information on chromosomes of a genetic algorithm, and a population of a plurality of individuals having said chromosomes is prepared and the genetic algorithm is used to optimize fitting parameters.

24. The optimal fitting parameter determination program according to claim 23, wherein said genetic algorithm comprises at least: a selection step of selecting at least two parent individuals, a child individual generation step of generating a plurality of new child individuals by applying at least one of a group of genetic operations consisting of a crossover process and a mutation process to the selected parent individuals, a fitness calculation step of calculating the physics model and calculating fitness values of the generated new child individuals, and a replacement step of determining individuals to be made individuals of a next generation of population from among the selected parent individuals and the generated new child individuals based on the calculated fitness values.

25. The optimal fitting parameter determination program according to claim 24, wherein, in said child individual generation step, said crossover process generates child individuals with real-number vectors having as components values appearing according to a continuous stipulated incidence probability distribution, and said incidence probability distribution is set based on real-number vector components of each of the selected parent individuals.

26. The optimal fitting parameter determination program according to claim 24, wherein, in said child individual generation step, said mutation process generates child individuals with real-number vectors having as components values appearing according to a continuous stipulated incidence probability distribution, and said incidence probability distribution is such that an incidence probability becomes higher the closer to at least one of the selected parent individuals.

27. The optimal fitting parameter determination program according to claim 25, wherein, in said selection step, three parent individuals are selected and said incidence probability distribution is a normal distribution centered on center points of two of the three selected, and a standard deviation of the normal distribution is such that a component in a direction of a main axis connecting real-number vectors of said two parent individuals is proportional to a distance between said two parent individuals, and components in other axes are proportional to a distance between the main axis and a remaining one of the three selected parent individuals.

28. The optimal fitting parameter determination program according to any one of claims 24 to 27, wherein said population of the plurality of individuals is laid out on lattice vertices, and in said selection step, regional subpopulations are formed from each individual and a stipulated number of neighboring individuals, and at least two parent individuals are selected from among the regional subpopulations.

29. The optimal fitting parameter determination program according to any one of claims 24 to 28, wherein, in said replacement step, from among the selected parent individual and the generated new child individuals, individuals of the next generation of population are determined based on a superiority relationship consisting of one evaluation criterion.

30. The optimal fitting parameter determination program according to any one of claims 24 to 28, wherein, in said replacement step, from among the selected parent individual and the generated new child individuals, individuals of the next generation of population are determined based on a superiority relationship consisting of two or more evaluation criteria.

31. The optimal fitting parameter determination program according to any one of claims 23 to 30, wherein optimization by means of a local search technique is performed with respect to the fitting parameters optimized using said genetic algorithm.

**32.** The optimal fitting parameter determination program according to any one of claims 23 to 30, wherein optimal fitting parameters for the physics model are found for each set of measurement data by means of an optimization technique, said fitting parameters are fitted using fitting functions so that changes among experimental conditions are smooth, and the optimal fitting parameters of the physics model for each experimental condition are determined collectively.

**33.** The optimal fitting parameter determination program according to claim 32, wherein said optimization technique is performed by means of a local search technique.

# F I G. 1

# F I G. 2

```
                    ┌─────────────┐
                    │    Start     │
                    └──────┬──────┘
                           │                              S1
                           ▼
    ┌──────────────────────────────────────────────────┐
    │  Prepare a set of measurements of physical quantities  │
    └──────────────────────┬───────────────────────────┘
                           │                              S2
                           ▼
    ┌──────────────────────────────────────────────────┐
    │ Propose a physics model that is to fit the measurement data │
    └──────────────────────┬───────────────────────────┘
                           │                              S3
                           ▼
    ┌──────────────────────────────────────────────────┐
    │        Use a genetic algorithm to optimize          │
    │        the parameters of the physics model          │
    └──────────────────────┬───────────────────────────┘
                           │                              S4
                           ▼
    ┌──────────────────────────────────────────────────┐
    │  Determine the parameters of the physics model     │
    └──────────────────────┬───────────────────────────┘
                           │
                           ▼
                    ┌─────────────┐
                    │     End      │
                    └─────────────┘
```

EP 1 413 981 A1

# F I G . 3

Set up virtual organisms and environment — S11

Start — S12

Generate initial population — S13

Calculate the fitness level of each individual — S14

Perform selection — S15

Perform crossing — S16

Perform mutation — S17

Evaluate organism population
Does it meet the evaluation criteria? — S18

NO

YES

End search — S19

FIG. 4

Chromosome
Ch

a  b  c  d  e

Gs  Gs  Gs  Gs  Gs
Genes

F I G. 5

Genes

| +2. 31 | −6. 45 | −3. 28 | +3. 55 | −4. 12 |

Chromosome

Fitting parameters

$\alpha = +2. 31$

$\beta = −6. 45$

$\gamma = −3. 28$

$\theta = +3. 55$

$\phi = −4. 12$

# F I G . 6

Physics model

$$f(x; \alpha, \beta, \gamma, \theta, \phi)$$

Ex. 1     fitness level $= \dfrac{1}{6} \displaystyle\sum_{i=1}^{6} (y_i - f(x_i))^2$

Ex. 2     fitness level $= \displaystyle\operatorname*{Max}_{i} |y_i - f(x_i)|$

# F I G. 7

```
        ┌─────────────────────────┐
        │   Start crossing process │
        └─────────────────────────┘
                    │
                    ▼
        ┌─────────────────────────┐        S21
        │   Randomly select parent │
        │ individual 3 from the    │
        │        population        │
        └─────────────────────────┘
                    │
                    ▼
    ┌─────────────────────────────────┐     S22
    │ Calculate the center C between   │
    │ the parameters of parent         │
    │ individuals 1 and 2 selected by  │
    │ the selection process            │
    └─────────────────────────────────┘
                    │
                    ▼
    ┌─────────────────────────────────┐     S23
    │ Generate child individuals 1     │
    │ and 2 according to the normal    │
    │ distribution probability set in  │
    │ the periphery of the center C    │
    └─────────────────────────────────┘
                    │
                    ▼
        ┌─────────────────────────┐
        │   End crossing process   │
        └─────────────────────────┘
```

# F I G. 8

Parent individual 2

Parent individual 3

$X_2$

$\sigma_\xi$

$\sigma_\eta$

$D$

$X_c$

$C$

$d$

$X_1$

Parent individual 1

Standard deviation of
the normal distribution

$$\sigma_\xi = a\,|d|$$

$$\sigma_\eta = bD$$

$\beta$

$0$

$\alpha$

# F I G. 9

Ch5 | +2. 31   −6. 45   −3. 28   +3. 55   −4. 12 |

Mutation ⇓

Normal random number $N(0, \sigma^2)$

+ | +0. 12   −0. 05   +0. 02   −0. 07   −0. 09 |

Ch6 | +2. 45   −6. 50   −3. 26   +3. 48   −4. 21 |

# F I G. 10

Start replacement process

Select the two individuals A and B with the highest fitness from among parent individuals 1 and 2 and child individuals 1 and 2 — S25

Replace parent individuals 1 and 2 with individuals A and B — S26

End replacement process

# FIG. 11

```
                    ( Fitting parameter optimization process )

                    Generate initial individual population  ——S31

                            Select individuals  ——S32

                              Crossing  ——S33

                              Mutation  ——S34

                          Calculate physics model  ——S35

Calculate fitness          Calculate fitness level  ——S36
level of each of
the 2 generated           Calculate physics model  ——S37
individuals
                          Calculate fitness level  ——S38

                            Replacement  ——S39

                                                          S40
                    Does evaluation of individual
                    population meet the criteria?          YES

                              NO

                                                        S41
                    Has the stipulated number
           NO       of generations been processed?

                              YES                        End
```

# F I G . 1 2

Adjacent region          Central individual

Regional subpopulation

# F I G. 13

```
┌─────────────────────────────┐
│    Start selection process   │
└─────────────────────────────┘
              │
              ▼
┌─────────────────────────────┐  ⌒ S50
│                             │
│  Randomly select a lattice  │
│           vertex            │
│                             │
└─────────────────────────────┘
              │
              ▼
┌─────────────────────────────┐  ⌒ S51
│                             │
│  Create a regional          │
│  subpopulation centered on  │
│  the selected vertex        │
│                             │
└─────────────────────────────┘
              │
              ▼
┌─────────────────────────────┐  ⌒ S52
│                             │
│  Randomly select two parent │
│  individuals within the     │
│  subpopulation              │
│                             │
└─────────────────────────────┘
              │
              ▼
┌─────────────────────────────┐
│     End selection process    │
└─────────────────────────────┘
```

# F I G. 14

Fitting parameter multi-objective optimization process

S60

Place initial individuals in the population at all lattice vertices

S61

Randomly select lattice vertices and create regional subpopulations

S62

Examine individuals within the subpopulation that are inferior to the center individual and generate that number of child individuals

S63

Use the center individual as one parent individual and randomly select the remaining parent individual from among the neighboring individuals

Crossing and mutation processes — S64

Calculate fitness level of child individual — S65

Replacement process — S66

Repeat for each child individual

S67

Does evaluation of individual population meet the criteria?    YES

NO

S68

Has the stipulated number of generations been processed?

NO

YES

End

FIG.15

( Start replacement process )

↓

**S70** — Select the location to place the generated child individual from the subpopulation determined in adjacent Step S61

↓

**S71** — Is the child individual superior to the selected individual E?

— NO → (to S73)

— YES ↓

**S72** — Replace individual E with the child individual

↓ (to End)

**S73** — Is individual E superior to the child individual?

— YES → (to End)

— NO ↓

**S74** — Calculate the number of niches within the subpopulation of individual E and the child individual

↓

**S75** — Is the number of niches of the child individual greater than the number of niches of individual E?

— YES → (to End)

— NO ↓

**S76** — Replace individual E with the child individual

↓ (to End)

( End replacement process )

# F I G. 1 6

Fitting results in a Pearson distribution-type physics model
(B[+] implantation into single-crystal silicon substrate at 100 keV
acceleration)

# F I G. 17

Fitting results in a Pearson distribution-type physics model
(B⁺ implantation into single-crystal silicon substrate at 1000 keV
acceleration)

F I G. 18

Fitting parameter $R_p$ as a function of acceleration energy

# F I G. 1 9

Fitting parameter $\sigma_p$ as a function of acceleration energy

# F I G. 20

Fitting parameter $\gamma$ as a function of acceleration energy

# F I G. 21

Fitting parameter $\beta$ as a function of acceleration energy

FIG. 22

```
            ┌─────────────┐
            │    Start    │
            └─────────────┘
                   │
                   ▼
   ┌──────────────────────────────────────────────┐  S80
   │ Prepare a plurality of sets of measurements of physical │
   │ quantities under different experimental conditions │
   └──────────────────────────────────────────────┘
                   │
                   ▼
   ┌──────────────────────────────────────────────┐  S81
   │         Propose a physics model to be fit       │
   └──────────────────────────────────────────────┘
                   │
                   ▼
   ┌──────────────────────────────────────────────┐  S82
   │ Use genetic algorithm to optimize physics model │
   │ parameters to the plurality of sets of data       │
   │                                                  │
   │   ┌ ─ ─ ─ ─ ─ ─ ─ ─ ─ ─ ─ ─ ─ ─ ─ ─ ─ ┐  S82A  │
   │     Use local search technique to optimize physics │
   │   │ model parameters to a single set of data      │ │
   │   └ ─ ─ ─ ─ ─ ─ ─ ─ ─ ─ ─ ─ ─ ─ ─ ─ ─ ┘         │
   │   ┌ ─ ─ ─ ─ ─ ─ ─ ─ ─ ─ ─ ─ ─ ─ ─ ─ ─ ┐  S82B  │
   │   │ Parameter fitting among experimental conditions │ │
   │   └ ─ ─ ─ ─ ─ ─ ─ ─ ─ ─ ─ ─ ─ ─ ─ ─ ─ ┘         │
   └──────────────────────────────────────────────┘
                   │
                   ▼
   ┌──────────────────────────────────────────────┐  S83
   │       Determine physical model parameters       │
   │           for a plurality of data sets           │
   └──────────────────────────────────────────────┘
                   │
                   ▼
            ┌─────────────┐
            │     End     │
            └─────────────┘
```

# F I G. 23

Chromosome
(experimental condition 1)

Chromosome
(experimental condition 2)

| +2.31 | −6.45 | −3.28 | +3.55 | −4.12 |

• • •

Genes

| −3.62 | +7.18 | +5.24 | −0.05 | +1.90 |

Chromosome
(experimental condition *m*)

Fitting parameters
under experimental
condition 1

$\alpha_1 = +2.31$
$\beta_1 = -6.45$
$\gamma_1 = -3.28$
$\theta_1 = +3.55$
$\phi_1 = -4.12$

Fitting parameters
under experimental
condition *m*

$\alpha_m = -3.62$
$\beta_m = +7.18$
$\gamma_m = +5.24$
$\theta_m = -0.05$
$\phi_m = +1.90$

# F I G. 24

Individual evaluation process
of the genetic algorithm

S90-1 . . S90-j . . . S90-m

Optimize fitting
parameters under
experimental
condition 1 by local
search technique

Optimize fitting
parameters under
experimental
condition $j$ by local
search technique

Optimize fitting
parameters under
experimental
condition $m$ by local
search technique

S91

Determine fitting function $G_i$ for each fitting parameter

S92-1 . . S92-j . . . S92-m

Calculate mean
square error under
experimental
condition 1

Calculate mean
square error under
experimental
condition $j$

Calculate mean
square error under
experimental
condition $m$

S93

Sum up mean square errors under all
experimental conditions and take this
to be the fitness level of the individual.

End

# F I G. 2 5

```
          ┌────────────────────────────────────────┐
          │ Mean square error calculation process  │
          │   under experimental condition j       │
          └────────────────────────────────────────┘
                             │
```

S100-1            . .          S100-i  . .                S100-n

| Calculate the fitting function $G_1$ found in Step S91 and calculate the value of fitting parameter 1 under experimental condition $j$ | . . | Calculate the fitting function $G_i$ found in Step S91 and calculate the value of fitting parameter $i$ under experimental condition $j$ | . . | Calculate the fitting function $G_n$ found in Step S91 and calculate the value of fitting parameter $n$ under experimental condition $j$ |

. . .          . . .

S101

| Calculate the physics model under experimental condition $j$ |

S102

| Recalculate error with respect to measured data under experimental condition $j$ and find the mean square error |

```
                    ┌──────┐
                    │ End  │
                    └──────┘
```

# F I G. 2 6

Fitting parameter $R_p$ as a function of acceleration energy

# F I G. 2 7

Fitting parameter $\sigma_p$ as a function of acceleration energy

# F I G. 28

Fitting parameter γ as a function of acceleration energy

# FIG. 29

Fitting parameter $\beta$ as a function of acceleration energy

F I G. 30

10 Fitting parameter optimization apparatus

# F I G. 3 1

10 Fitting parameter optimization apparatus

# F I G. 3 2

10 Fitting parameter optimization apparatus

| 11 | Fitness level calculating means |
| 12 | Genetic manipulation processing means |
| 13 | Evaluation means |
| 18 | Local search technique processing means |
| 19 | Parameter fitting processing means |
| 14 | Memory |
| 15 | Input/output means |

16

Physics model calculation device

Memory

16M

# F I G. 3 3

10 Fitting parameter optimization apparatus

| | |
|---|---|
| Fitness level calculating means 11 | |
| Genetic manipulation processing means 12 | Physics model calculation means 17 |
| Evaluation means 13 | Local search technique processing means 18 |
| Memory 14 | Parameter fitting processing means 19 |
| | Input/output means |

55

## INTERNATIONAL SEARCH REPORT

| International application No. |
| --- |
| PCT/JP02/07429 |

**A. CLASSIFICATION OF SUBJECT MATTER**
Int.Cl$^7$ G06N3/00

According to International Patent Classification (IPC) or to both national classification and IPC

**B. FIELDS SEARCHED**

Minimum documentation searched (classification system followed by classification symbols)
Int.Cl$^7$ G06N1/00-7/08, G06F19/00, G06F17/10

Documentation searched other than minimum documentation to the extent that such documents are included in the fields searched

| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)
Computer Software DataBase(Japanese Patent Office),
JICST FILE(JOIS), INSPEC(DIALOG)

**C. DOCUMENTS CONSIDERED TO BE RELEVANT**

| Category* | Citation of document, with indication, where appropriate, of the relevant passages | Relevant to claim No. |
| --- | --- | --- |
| X | Fujiichi YOSHIMOTO et al., "Jissu o Idenshi to shita Identeki Algorithm ni yoru Deta Atehame", Transactions of Information Processing Society of Japan, 15 January, 2000 (15.01.00), Vol.41, No.1, pages 70 to 82, full text | 1,12,23 |
| Y | Fujiichi YOSHIMOTO et al., "Jissu o Idenshi to shita Identeki Algorithm ni yoru Data Atehame", Transactions of Information Processing Society of Japan, 15 January, 2000 (15.01.00), Vol.41, No.1, pages 70 to 82, full text | 2-9,12-20, 23-31 |
| Y | Isamu ONO et al., "Jissugata GA to sono Oyo", Journal of Japanese Society for Artificial Intelligence, 01 March, 2001 (01.03.01), Vol.15, No.2, pages 259 to 266, Sections 4.1, 4.2, 4.4 | 2-5,13-16, 24-27 |

| ☒ Further documents are listed in the continuation of Box C. | ☐ See patent family annex. |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 October, 2002 (01.10.02) | 15 October, 2002 (15.10.02) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP02/07429 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | Ono, I. et al., A Real-coded Genetic Algorithm for Function Optimization Using Unimodal Normal Distribution Crossover, Proc. of the 7th Int. Conf. on Genetic Algorithms, 1997, pages 246 to 253, sections 3 to 4 | 2-5,13-16, 24-27 |
| Y | Masahiro MURAKAMI et al., "Kinbo Model Identeki Algorithm ni yoru Tamokuteki Saitekika", Transactions of Information Processing Society of Japan, 15 April, 1999 (15.04.99), Vol.40, No.4, pages 1792 to 1800, sections 3, 4 | 6-9,17-20, 28-31 |
| Y | Horn, J. et al., A niched Pareto genetic algorithm for multi objective optimization, Proc. of the First IEEE Conf. on Evolutionary Computation, 1994, Vol.1, pages 82 to 87, ISBN:0-7803-1899-4, page 83, left column, line 5 to page 84, right column, line 5 | 6-9,17-20, 28-31 |
| Y | Muhlenbein, H., Parallel Genetic Algorithms, Proc. of the 3rd Int. Conf. on Genetic Algorithms, 1989, pages 416 to 421, full text | 6,17,28 |

Form PCT/ISA/210 (continuation of second sheet) (July 1998)

## INTERNATIONAL SEARCH REPORT

International application No.

PCT/JP02/07429

| Box I | Observations where certain claims were found unsearchable (Continuation of item 1 of first sheet) |

This international search report has not been established in respect of certain claims under Article 17(2)(a) for the following reasons:

1. ☐ Claims Nos.:

    because they relate to subject matter not required to be searched by this Authority, namely:

2. ☒ Claims Nos.: 10, 11, 21, 22, 32, 33

    because they relate to parts of the international application that do not comply with the prescribed requirements to such an extent that no meaningful international search can be carried out, specifically:
The technical matter of the claims that "the fitting parameters are fitted by using a fitting function so that the variation may be smooth between experiment conditions" is unclear even in considering the description, claims, and drawings. (continued to extra sheet)

3. ☐ Claims Nos.:

    because they are dependent claims and are not drafted in accordance with the second and third sentences of Rule 6.4(a).

| Box II | Observations where unity of invention is lacking (Continuation of item 2 of first sheet) |

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☐ No protest accompanied the payment of additional search fees.

Form PCT/ISA/210 (continuation of first sheet (1)) (July 1998)

**INTERNATIONAL SEARCH REPORT**

International application No.

PCT/JP02/07429

Continuation of Box No.I-2 of continuation of first sheet(1)

Therefore, no meaningfull international search cannot be carried out on the basis of these filed documents.

Form PCT/ISA/210 (extra sheet) (July 1998)

59